(19)

Europäisches Patentamt
European Patent Office
Office européen des brevets

(11) **EP 4 776 739 A1**

(12) **EUROPEAN PATENT APPLICATION**
published in accordance with Art. 153(4) EPC

(43) Date of publication:
**15.07.2026 Bulletin 2026/29**

(21) Application number: **24863296.0**

(22) Date of filing: **10.09.2024**

(51) International Patent Classification (IPC):
*H04W 74/0816* (2024.01)    *H04W 74/00* (2009.01)
*H04W 48/08* (2009.01)    *H04W 4/70* (2018.01)

(52) Cooperative Patent Classification (CPC):
**H04W 4/70; H04W 48/08; H04W 74/00;
H04W 74/0816**

(86) International application number:
**PCT/KR2024/013670**

(87) International publication number:
**WO 2025/053717 (13.03.2025 Gazette 2025/11)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **10.09.2023 US 202363537546 P**

(71) Applicant: **LG Electronics Inc.**
**Seoul 07336 (KR)**

(72) Inventors:
• **LEE, Youngdae**
**Seoul 06772 (KR)**

• **KIM, Jaehyung**
**Seoul 06772 (KR)**
• **YANG, Suckchel**
**Seoul 06772 (KR)**
• **KIM, Seonwook**
**Seoul 06772 (KR)**
• **LEE, Seungmin**
**Seoul 06772 (KR)**

(74) Representative: **Plasseraud IP**
**104 Rue de Richelieu**
**CS92104**
**75080 Paris Cedex 02 (FR)**

(54) **METHOD AND APPARATUS FOR PERFORMING BACKSCATTERING-BASED COMMUNICATION IN WIRELESS COMMUNICATION SYSTEM**

(57) A method and an apparatus for performing communication in a wireless communication system are disclosed. The method according to an embodiment of the present disclosure comprises the steps of: a first device receiving, from a network node, a first message including first information related to the entire time duration for transmitting a second message; and the first device transmitting, on the basis of an energy storage level of the first device, the second message to the network node within a first time duration or a second time duration from among the entire time duration, wherein a start time point of the entire time duration may be determined on the basis of second information related to the first message.

FIG.8

RECEIVING, FROM A NETWORK NODE, A FIRST MESSAGE INCLUDING FIRST INFORMATION RELATED TO THE ENTIRE TIME PERIOD FOR TRANSMITTING THE SECOND MESSAGE — S810

TRANSMITTING A SECOND MESSAGE TO THE NETWORK NODE WITHIN A FIRST TIME INTERVAL OR A SECOND TIME INTERVAL AMONG THE ENTIRE TIME PERIOD BASED ON THE ENERGY STORAGE LEVEL OF THE FIRST DEVICE — S820

**Description**

[TECHNICAL FIELD]

The present disclosure relates to a wireless communication system, and more particularly, to a method and apparatus for performing backscattering-based communication in a wireless communication system.

[BACKGROUND]

A mobile communication system has been developed to provide a voice service while guaranteeing mobility of users. However, a mobile communication system has extended even to a data service as well as a voice service, and currently, an explosive traffic increase has caused shortage of resources and users have demanded a faster service, so a more advanced mobile communication system has been required.

The requirements of a next-generation mobile communication system at large should be able to support accommodation of explosive data traffic, a remarkable increase in a transmission rate per user, accommodation of the significantly increased number of connected devices, very low End-to-End latency and high energy efficiency. To this end, a variety of technologies such as Dual Connectivity, Massive Multiple Input Multiple Output (Massive MIMO), In-band Full Duplex, Non-Orthogonal Multiple Access (NOMA), Super wideband Support, Device Networking, etc. have been researched.

[Disclosure]

[Technical Problem]

The technical problem of the present disclosure relates to a method and device for performing backscattering-based communication in a wireless communication system.

The technical problem of the present disclosure relates to a method and device for performing connection and collision avoidance operations in ambient Internet of Things (IoT) communication.

The technical problems to be achieved by the present disclosure are not limited to the above-described technical objects, and other technical problems which are not described herein will be clearly understood by those skilled in the pertinent art from the following description.

[Technical Solution]

A method according to one embodiment of the present disclosure may include receiving, by a first device from a network node, a first message including first information related to a entire time period for transmitting a second message; and transmitting, by the first device to the network node, the second message within a first time interval or a second time interval among the entire time period based on an energy storage level of the first device, and a starting point of the entire time period may be determined based on the second information related to the first message.

A method according to another embodiment of the present disclosure may include transmitting, by a network node to at least one device including a first device, a first message including first information related to an entire time period for transmitting a second message; and receiving, by the network node from the first device, the second message within a first time interval or a second time interval of the entire time period based on an energy storage level of the first device, and a starting point of the entire time period may be determined based on the second information related to the first message.

[Technical Effects]

According to various embodiments of the present disclosure, a method and device for performing backscattering-based communication in a wireless communication system may be provided.

According to various embodiments of the present disclosure, a method and device for performing connection and collision avoidance operations in ambient Internet of Things (IoT) communication may be provided.

Effects achievable by the present disclosure are not limited to the above-described effects, and other effects which are not described herein may be clearly understood by those skilled in the pertinent art from the following description.

[BRIEF DESCRIPTION OF THE DRAWINGS]

Accompanying drawings included as part of detailed description for understanding the present disclosure provide embodiments of the present disclosure and describe technical features of the present disclosure with detailed description.

FIG. 1 illustrates a structure of a wireless communication system to which the present disclosure may be applied.
FIG. 2 illustrates a frame structure in a wireless communication system to which the present disclosure may be applied.
FIG. 3 illustrates a resource grid in a wireless communication system to which the present disclosure may be applied.
FIG. 4 illustrates a physical resource block in a wireless communication system to which the present disclosure may be applied.
FIG. 5 illustrates a slot structure in a wireless communication system to which the present disclosure may be applied.
FIG. 6 illustrates physical channels used in a wireless communication system to which the present disclosure may be applied and a general signal transmission and reception method using them.
FIG. 7 illustrates topologies applicable to a wireless communication system to which the present disclosure may be applied.
FIG. 8 is a flowchart illustrating a method performed by a first device according to an embodiment of the present disclosure.
FIG. 9 is a flowchart illustrating a method performed by a network node according to an embodiment of the present disclosure.
FIG. 10 is a flowchart illustrating a procedure for an ambient IoT device to access a reader device according to an embodiment of the present disclosure.
FIG. 11 is a diagram illustrating a method for setting a symbol interval for AmIoT device communication according to an embodiment of the present disclosure.
FIG. 12 is a diagram illustrating a process for an AmIoT device to perform a backscattering operation according to an embodiment of the present disclosure.
FIG. 13 is a diagram illustrating a signaling procedure between an AmIoT device and a network node according to an embodiment of the present disclosure.
FIG. 14 illustrates a block diagram of a wireless communication device according to one embodiment of the present disclosure.

[DETAILED DESCRIPTION]

Hereinafter, embodiments according to the present disclosure will be described in detail by referring to accompanying drawings. Detailed description to be disclosed with accompanying drawings is to describe exemplary embodiments of the present disclosure and is not to represent the only embodiment that the present disclosure may be implemented. The following detailed description includes specific details to provide complete understanding of the present disclosure. However, those skilled in the pertinent art knows that the present disclosure may be implemented without such specific details.

In some cases, known structures and devices may be omitted or may be shown in a form of a block diagram based on a core function of each structure and device in order to prevent a concept of the present disclosure from being ambiguous.

In the present disclosure, when an element is referred to as being "connected", "combined" or "linked" to another element, it may include an indirect connection relation that yet another element presents therebetween as well as a direct connection relation. In addition, in the present disclosure, a term, "include" or "have", specifies the presence of a mentioned feature, step, operation, component and/or element, but it does not exclude the presence or addition of one or more other features, stages, operations, components, elements and/or their groups.

In the present disclosure, a term such as "first", "second", etc. is used only to distinguish one element from other element and is not used to limit elements, and unless otherwise specified, it does not limit an order or importance, etc. between elements. Accordingly, within a scope of the present disclosure, a first element in an embodiment may be referred to as a second element in another embodiment and likewise, a second element in an embodiment may be referred to as a first element in another embodiment.

A term used in the present disclosure is to describe a specific embodiment, and is not to limit a claim. As used in a described and attached claim of an embodiment, a singular form is intended to include a plural form, unless the context clearly indicates otherwise. A term used in the present disclosure, "and/or", may refer to one of related enumerated items or it means that it refers to and includes any and all possible combinations of two or more of them. In addition, "/" between words in the present disclosure has the same meaning as "and/or", unless otherwise described.

The present disclosure describes a wireless communication network or a wireless communication system, and an operation performed in a wireless communication network may be performed in a process in which a device (e.g., a base station) controlling a corresponding wireless communication network controls a network and transmits or receives a signal, or may be performed in a process in which a terminal associated to a corresponding wireless network transmits or receives a signal with a network or between terminals.

In the present disclosure, transmitting or receiving a channel includes a meaning of transmitting or receiving information or a signal through a corresponding channel. For example, transmitting a control channel means that control information or a control signal is transmitted through a control channel. Similarly, transmitting a data channel means that data information or a data signal is transmitted through a data channel.

Hereinafter, a downlink (DL) means a communication from a base station to a terminal and an uplink (UL) means a communication from a terminal to a base station. In a downlink, a transmitter may be part of a base station and a receiver may be part of a terminal. In an uplink, a transmitter may be part of a terminal and a receiver may be part of a base station. A base station may be expressed as a first communication device and a terminal may be expressed as a second communication device. A base station (BS) may be substituted with a term such as a fixed station, a Node B, an eNB(evolved-NodeB), a gNB(Next Generation NodeB), a BTS(base transceiver system), an Access Point(AP), a Network(5G network), an AI(Artificial Intelligence) system/module, an RSU(road side unit), a robot, a drone(UAV: Unmanned Aerial Vehicle), an AR(Augmented Reality) device, a VR(Virtual Reality) device, etc. In addition, a terminal may be fixed or mobile, and may be substituted with a term such as a UE(User Equipment), an MS(Mobile Station), a UT(user terminal), an MSS(Mobile Subscriber Station), an SS(Subscriber Station), an AMS(Advanced Mobile Station), a WT(Wireless terminal), an MTC(Machine-Type Communication) device, an M2M(Machine-to-Machine) device, a D2D(Device-to-Device) device, a vehicle, an RSU(road side unit), a robot, an AI(Artificial Intelligence) module, a drone(UAV: Unmanned Aerial Vehicle), an AR(Augmented Reality) device, a VR(Virtual Reality) device, etc.

The following description may be used for a variety of radio access systems such as CDMA, FDMA, TDMA, OFDMA, SC-FDMA, etc. CDMA may be implemented by a wireless technology such as UTRA(Universal Terrestrial Radio Access) or CDMA2000. TDMA may be implemented by a radio technology such as GSM(Global System for Mobile communications)/GPRS(General Packet Radio Service)/EDGE(Enhanced Data Rates for GSM Evolution). OFDMA may be implemented by a radio technology such as IEEE 802.11(Wi-Fi), IEEE 802.16(WiMAX), IEEE 802-20, E-UTRA(Evolved UTRA), etc. UTRA is a part of a UMTS(Universal Mobile Telecommunications System). 3GPP(3rd Generation Partnership Project) LTE(Long Term Evolution) is a part of an E-UMTS(Evolved UMTS) using E-UTRA and LTE-A(Advanced)/LTE-A pro is an advanced version of 3GPP LTE. 3GPP NR(New Radio or New Radio Access Technology) is an advanced version of 3GPP LTE/LTE-A/LTE-A pro.

To clarify description, it is described based on a 3GPP communication system (e.g., LTE-A, NR), but a technical idea of the present disclosure is not limited thereto. LTE means a technology after 3GPP TS(Technical Specification) 36.xxx Release 8. In detail, an LTE technology in or after 3GPP TS 36.xxx Release 10 is referred to as LTE-A and an LTE technology in or after 3GPP TS 36.xxx Release 13 is referred to as LTE-A pro. 3GPP NR means a technology in or after TS 38.xxx Release 15. LTE/NR may be referred to as a 3GPP system. "xxx" means a detailed number for a standard document. LTE/NR may be commonly referred to as a 3GPP system. For a background art, a term, an abbreviation, etc. used to describe the present disclosure, matters described in a standard document disclosed before the present disclosure may be referred to. For example, the following document may be referred to.

For 3GPP LTE, TS 36.211(physical channels and modulation), TS 36.212(multiplexing and channel coding), TS 36.213(physical layer procedures), TS 36.300(overall description), TS 36.331(radio resource control) may be referred to.

For 3GPP NR, TS 38.211(physical channels and modulation), TS 38.212(multiplexing and channel coding), TS 38.213(physical layer procedures for control), TS 38.214(physical layer procedures for data), TS 38.300(NR and NG-RAN(New Generation-Radio Access Network) overall description), TS 38.331(radio resource control protocol specification) may be referred to.

Abbreviations of terms which may be used in the present disclosure is defined as follows.

- BM: beam management
- CQI: Channel Quality Indicator
- CRI: channel state information - reference signal resource indicator
- CSI: channel state information
- CSI-IM: channel state information - interference measurement
- CSI-RS: channel state information - reference signal
- DMRS: demodulation reference signal
- FDM: frequency division multiplexing
- FFT: fast Fourier transform
- IFDMA: interleaved frequency division multiple access
- IFFT: inverse fast Fourier transform
- L1-RSRP: Layer 1 reference signal received power
- L1-RSRQ: Layer 1 reference signal received quality
- MAC: medium access control
- NZP: non-zero power

- OFDM: orthogonal frequency division multiplexing
- PDCCH: physical downlink control channel
- PDSCH: physical downlink shared channel
- PMI: precoding matrix indicator
- RE: resource element
- RI: Rank indicator
- RRC: radio resource control
- RSSI: received signal strength indicator
- Rx: Reception
- QCL: quasi co-location
- SINR: signal to interference and noise ratio
- SSB (or SS/PBCH block): Synchronization signal block (including PSS (primary synchronization signal), SSS (secondary synchronization signal) and PBCH (physical broadcast channel))
- TDM: time division multiplexing
- TRP: transmission and reception point
- TRS: tracking reference signal
- Tx: transmission
- UE: user equipment
- ZP: zero power

Overall System

As more communication devices have required a higher capacity, a need for an improved mobile broadband communication compared to the existing radio access technology (RAT) has emerged. In addition, massive MTC (Machine Type Communications) providing a variety of services anytime and anywhere by connecting a plurality of devices and things is also one of main issues which will be considered in a next-generation communication. Furthermore, a communication system design considering a service/a terminal sensitive to reliability and latency is also discussed. As such, introduction of a next-generation RAT considering eMBB(enhanced mobile broadband communication), mMTC(massive MTC), URLLC(Ultra-Reliable and Low Latency Communication), etc. is discussed and, for convenience, a corresponding technology is referred to as NR in the present disclosure. NR is an expression which represents an example of a 5G RAT.

A new RAT system including NR uses an OFDM transmission method or a transmission method similar to it. A new RAT system may follow OFDM parameters different from OFDM parameters of LTE. Alternatively, a new RAT system follows a numerology of the existing LTE/LTE-A as it is, but may support a wider system bandwidth (e.g., 100MHz). Alternatively, one cell may support a plurality of numerologies. In other words, terminals which operate in accordance with different numerologies may coexist in one cell.

A numerology corresponds to one subcarrier spacing in a frequency domain. As a reference subcarrier spacing is scaled by an integer N, a different numerology may be defined.

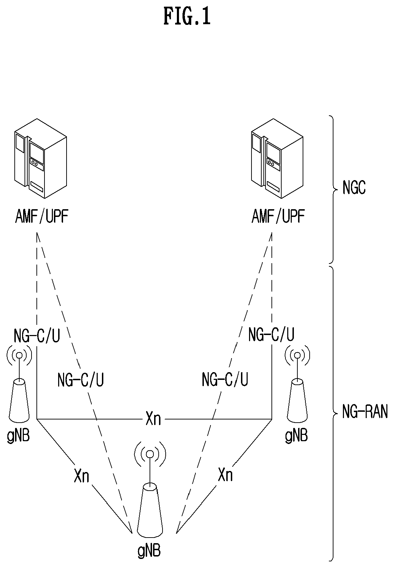

FIG. 1 illustrates a structure of a wireless communication system to which the present disclosure may be applied.

In reference to FIG. 1, NG-RAN is configured with gNBs which provide a control plane (RRC) protocol end for a NG-RA(NG-Radio Access) user plane (i.e., a new AS(access stratum) sublayer/PDCP(Packet Data Convergence Protocol)/RLC(Radio Link Control)/MAC/PHY) and UE. The gNBs are interconnected through a Xn interface. The gNB, in addition, is connected to an NGC(New Generation Core) through an NG interface. In more detail, the gNB is connected to an AMF(Access and Mobility Management Function) through an N2 interface, and is connected to a UPF(User Plane Function) through an N3 interface.

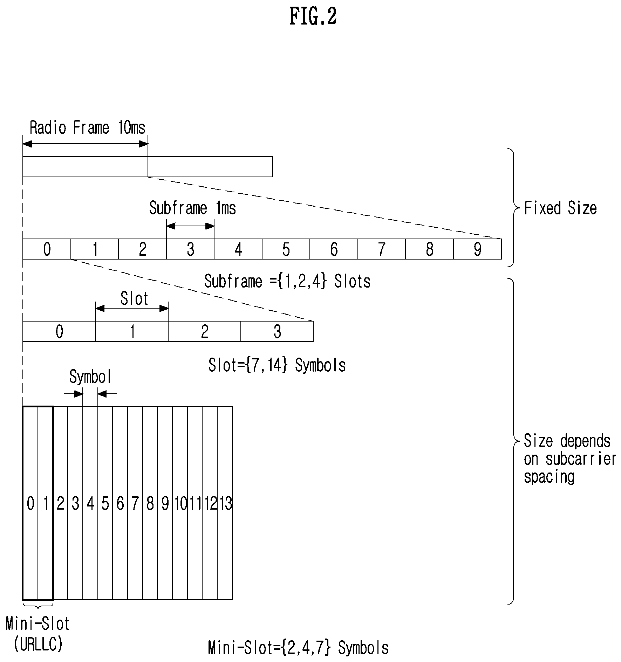

FIG. 2 illustrates a frame structure in a wireless communication system to which the present disclosure may be applied.

A NR system may support a plurality of numerologies. Here, a numerology may be defined by a subcarrier spacing and a cyclic prefix (CP) overhead. Here, a plurality of subcarrier spacings may be derived by scaling a basic (reference) subcarrier spacing by an integer N (or, $\mu$). In addition, although it is assumed that a very low subcarrier spacing is not used in a very high carrier frequency, a used numerology may be selected independently from a frequency band. In addition, a variety of frame structures according to a plurality of numerologies may be supported in a NR system.

Hereinafter, an OFDM numerology and frame structure which may be considered in a NR system will be described. A plurality of OFDM numerologies supported in a NR system may be defined as in the following Table 1.

[Table 1]

| μ | Δf=2^μ·15 [kHz] | CP |
|---|---|---|
| 0 | 15 | Normal |
| 1 | 30 | Normal |
| 2 | 60 | Normal, Extended |
| 3 | 120 | Normal |
| 4 | 240 | Normal |

NR supports a plurality of numerologies (or subcarrier spacings (SCS)) for supporting a variety of 5G services. For example, when a SCS is 15kHz, a wide area in traditional cellular bands is supported, and when a SCS is 30kHz/60kHz, dense-urban, lower latency and a wider carrier bandwidth are supported, and when a SCS is 60kHz or higher, a bandwidth wider than 24.25GHz is supported to overcome a phase noise. An NR frequency band is defined as a frequency range in two types (FR1, FR2). FR1, FR2 may be configured as in the following Table 2. In addition, FR2 may mean a millimeter wave (mmW).

[Table 2]

| Frequency Range designation | Corresponding frequency range | Subcarrier Spacing |
|---|---|---|
| FR1 | 410MHz - 7125MHz | 15, 30, 60kHz |
| FR2 | 24250MHz - 52600MHz | 60, 120, 240kHz |

Regarding a frame structure in an NR system, a size of a variety of fields in a time domain is expresses as a multiple of a time unit of $T_c=1/(\Delta f_{max}\cdot N_f)$. Here, $\Delta f_{max}$ is $480\cdot 10^3$ Hz and $N_f$ is 4096. Downlink and uplink transmission is configured (organized) with a radio frame having a duration of $T_f=1/(\Delta f_{max}N_f/100)\cdot T_c=10ms$. Here, a radio frame is configured with 10 subframes having a duration of $T_{sf}=(\Delta f_{max}N_f/1000)\cdot T_c=1ms$, respectively. In this case, there may be one set of frames for an uplink and one set of frames for a downlink. In addition, transmission in an uplink frame No. i from a terminal should start earlier by $T_{TA}=(N_{TA}+N_{TA,offset})T_c$ than a corresponding downlink frame in a corresponding terminal starts. For a subcarrier spacing configuration μ, slots are numbered in an increasing order of $n_s^\mu \in \{0,..., N_{slot}^{subframe,\mu}-1\}$ in a subframe and are numbered in an increasing order of $n_{s,f}^\mu \in \{0,..., N_{slot}^{frame,\mu}-1\}$ in a radio frame. One slot is configured with $N_{symb}^{slot}$ consecutive OFDM symbols and $N_{symb}^{slot}$ is determined according to CP. A start of a slot $n_s^\mu$ in a subframe is temporally arranged with a start of an OFDM symbol $n_s^\mu N_{symb}^{slot}$ in the same subframe. All terminals may not perform transmission and reception at the same time, which means that all OFDM symbols of a downlink slot or an uplink slot may not be used. Table 3 represents the number of OFDM symbols per slot ($N_{symb}^{slot}$), the number of slots per radio frame ($N_{slot}^{frame,\mu}$) and the number of slots per subframe ($N_{slot}^{subframe,\mu}$) in a normal CP and Table 4 represents the number of OFDM symbols per slot, the number of slots per radio frame and the number of slots per subframe in an extended CP.

[Table 3]

| μ | $N_{symb}^{slot}$ | $N_{slot}^{frame,\mu}$ | $N_{slot}^{subframe,\mu}$ |
|---|---|---|---|
| 0 | 14 | 10 | 1 |
| 1 | 14 | 20 | 2 |
| 2 | 14 | 40 | 4 |
| 3 | 14 | 80 | 8 |
| 4 | 14 | 160 | 16 |

[Table 4]

| μ | $N_{symb}^{slot}$ | $N_{slot}^{frame,\mu}$ | $N_{slot}^{subframe,\mu}$ |
|---|---|---|---|
| 2 | 12 | 40 | 4 |

FIG. 2 is an example on μ=2 (SCS is 60kHz), 1 subframe may include 4 slots referring to Table 3. 1 subframe={ 1,2,4} slot shown in FIG. 2 is an example, the number of slots which may be included in 1 subframe is defined as in Table 3 or Table 4. In addition, a mini-slot may include 2, 4 or 7 symbols or more or less symbols. Regarding a physical resource in a NR system, an antenna port, a resource grid, a resource element, a resource block, a carrier part, etc. may be considered.

Hereinafter, the physical resources which may be considered in an NR system will be described in detail. First, in relation to an antenna port, an antenna port is defined so that a channel where a symbol in an antenna port is carried can be inferred from a channel where other symbol in the same antenna port is carried. When a large-scale property of a channel where a symbol in one antenna port is carried may be inferred from a channel where a symbol in other antenna port is carried, it may be said that 2 antenna ports are in a QC/QCL(quasi co-located or quasi co-location) relationship. In this case, the large-scale property includes at least one of delay spread, doppler spread, frequency shift, average received power, received timing.

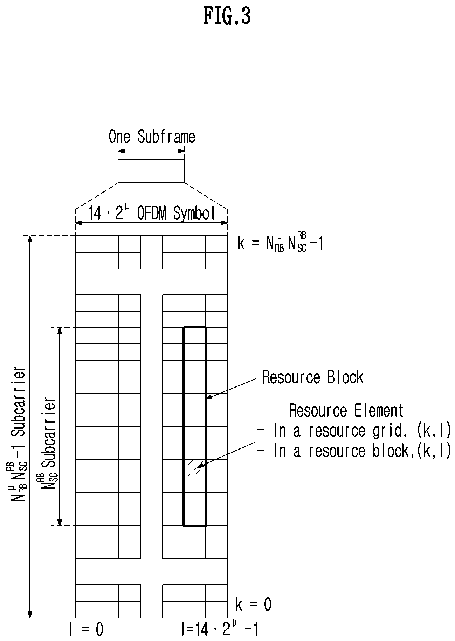

FIG. 3 illustrates a resource grid in a wireless communication system to which the present disclosure may be applied. In reference to FIG. 3, it is illustratively described that a resource grid is configured with $N_{RB}^{\mu} N_{sc}^{RB}$ subcarriers in a frequency domain and one subframe is configured with $14 \cdot 2^{\mu}$ OFDM symbols, but it is not limited thereto. In an NR system, a transmitted signal is described by OFDM symbols of $2^{\mu} N_{symb}^{(\mu)}$ and one or more resource grids configured with $N_{RB}^{\mu} N_{sc}^{RB}$ subcarriers. Here, $N_{RB}^{\mu} \leq N_{RB}^{max,\mu}$. The $N_{RB}^{max,\mu}$ represents a maximum transmission bandwidth, which may be different between an uplink and a downlink as well as between numerologies. In this case, one resource grid may be configured per $\mu$ and antenna port p. Each element of a resource grid for $\mu$ and an antenna port p is referred to as a resource element and is uniquely identified by an index pair (k,l').

Here, $k=0,...,N_{RB}^{\mu} N_{sc}^{RB}-1$ is an index in a frequency domain and $l'=0,...,2^{\mu} N_{symb}^{(\mu)}-1$ refers to a position of a symbol in a subframe. When referring to a resource element in a slot, an index pair (k,l) is used. Here, $l=0,...,N_{symb}^{\mu}-1$. A resource element (k,l') for $\mu$ and an antenna port p corresponds to a complex value, $a_{k,l'}^{(p,\mu)}$. When there is no risk of confusion or when a specific antenna port or numerology is not specified, indexes p and $\mu$ may be dropped, whereupon a complex value may be $a_{k,l'}^{(p)}$ or $a_{k,l'}$. In addition, a resource block (RB) is defined as $N_{sc}^{RB}=12$ consecutive subcarriers in a frequency domain.

Point A plays a role as a common reference point of a resource block grid and is obtained as follows.

- offsetToPointA for a primary cell (PCell) downlink represents a frequency offset between point A and the lowest subcarrier of the lowest resource block overlapped with a SS/PBCH block which is used by a terminal for an initial cell selection. It is expressed in resource block units assuming a 15kHz subcarrier spacing for FR1 and a 60kHz subcarrier spacing for FR2.
- absoluteFrequencyPointA represents a frequency-position of point A expressed as in ARFCN (absolute radio-frequency channel number).

Common resource blocks are numbered from 0 to the top in a frequency domain for a subcarrier spacing configuration $\mu$. The center of subcarrier 0 of common resource block 0 for a subcarrier spacing configuration $\mu$ is identical to 'point A'. A relationship between a common resource block number $n_{CRB}^{\mu}$ and a resource element (k,l) for a subcarrier spacing configuration $\mu$ in a frequency domain is given as in the following Equation 1.

【Equation 1】

$$n_{CRB}^{\mu} = \left\lfloor \frac{k}{N_{sc}^{RB}} \right\rfloor$$

In Equation 1, k is defined relatively to point A so that k=0 corresponds to a subcarrier centering in point A. Physical resource blocks are numbered from 0 to $N_{BWP,i}^{size,\mu}-1$ in a bandwidth part (BWP) and i is a number of a BWP. A relationship between a physical resource block $n_{PRB}$ and a common resource block $n_{CRB}$ in BWP i is given by the following Equation 2.

【Equation 2】

$$n_{CRB}^{\mu} = n_{PRB}^{\mu} + N_{BWP,i}^{start,\mu}$$

$N_{BWP,i}^{start,\mu}$ is a common resource block that a BWP starts relatively to common resource block 0.

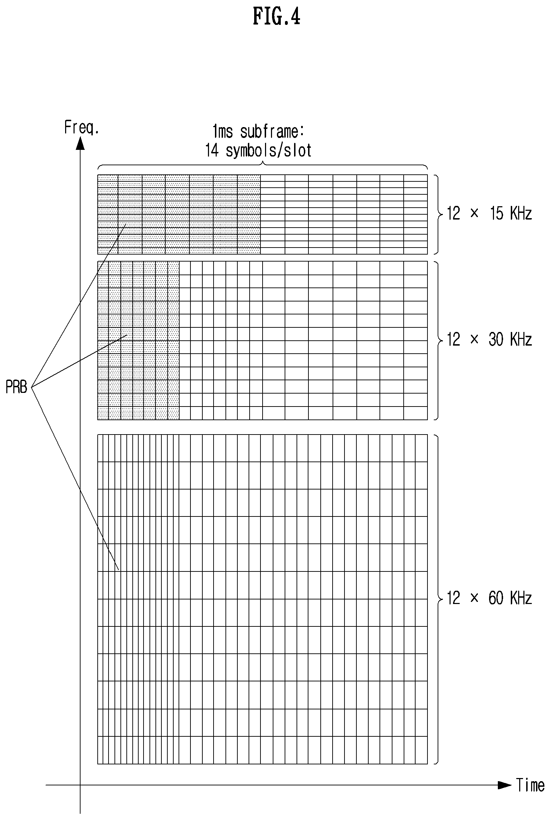

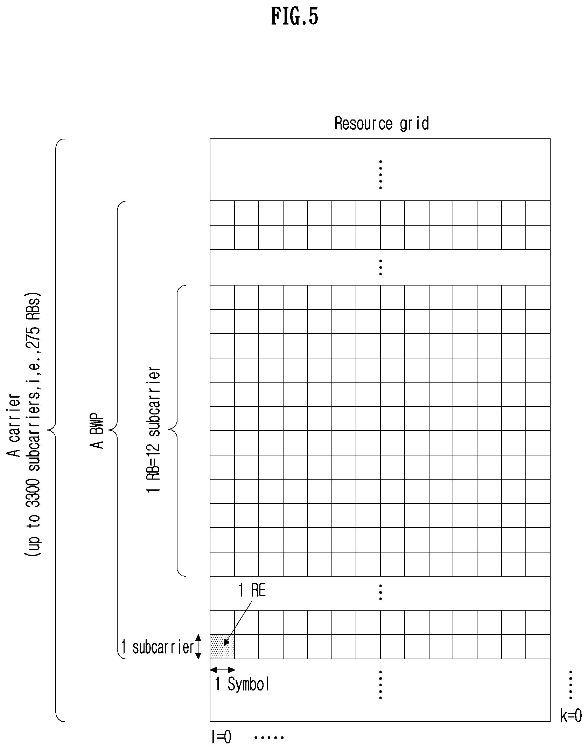

FIG. 4 illustrates a physical resource block in a wireless communication system to which the present disclosure may be applied. And, FIG. 5 illustrates a slot structure in a wireless communication system to which the present disclosure may be applied.

In reference to FIG. 4 and FIG. 5, a slot includes a plurality of symbols in a time domain. For example, for a normal CP, one slot includes 7 symbols, but for an extended CP, one slot includes 6 symbols.

A carrier includes a plurality of subcarriers in a frequency domain. An RB (Resource Block) is defined as a plurality of (e.g., 12) consecutive subcarriers in a frequency domain. A BWP(Bandwidth Part) is defined as a plurality of consecutive (physical) resource blocks in a frequency domain and may correspond to one numerology (e.g., an SCS, a CP length, etc.). A carrier may include a maximum N (e.g., 5) BWPs. A data communication may be performed through an activated BWP and only one BWP may be activated for one terminal. In a resource grid, each element is referred to as a resource element (RE) and one complex symbol may be mapped.

In an NR system, up to 400 MHz may be supported per component carrier (CC). If a terminal operating in such a wideband CC always operates turning on a radio frequency (FR) chip for the whole CC, terminal battery consumption may increase. Alternatively, when several application cases operating in one wideband CC (e.g., eMBB, URLLC, Mmtc, V2X, etc.) are considered, a different numerology (e.g., a subcarrier spacing, etc.) may be supported per frequency band in a corresponding CC. Alternatively, each terminal may have a different capability for the maximum bandwidth. By considering it, a base station may indicate a terminal to operate only in a partial bandwidth, not in a full bandwidth of a wideband CC, and a corresponding partial bandwidth is defined as a bandwidth part (BWP) for convenience. A BWP may be configured with consecutive RBs on a frequency axis and may correspond to one numerology (e.g., a subcarrier spacing, a CP length, a slot/a mini-slot duration).

Meanwhile, a base station may configure a plurality of BWPs even in one CC configured to a terminal. For example, a BWP occupying a relatively small frequency domain may be configured in a PDCCH monitoring slot, and a PDSCH indicated by a PDCCH may be scheduled in a greater BWP.

Alternatively, when UEs are congested in a specific BWP, some terminals may be configured with other BWP for load balancing. Alternatively, considering frequency domain inter-cell interference cancellation between neighboring cells, etc., some middle spectrums of a full bandwidth may be excluded and BWPs on both edges may be configured in the same slot. In other words, a base station may configure at least one DL/UL BWP to a terminal associated with a wideband CC.

A base station may activate at least one DL/UL BWP of configured DL/UL BWP(s) at a specific time (by L1 signaling or MAC CE(Control Element) or RRC signaling, etc.). In addition, a base station may indicate switching to other configured DL/UL BWP (by L1 signaling or MAC CE or RRC signaling, etc.). Alternatively, based on a timer, when a timer value is expired, it may be switched to a determined DL/UL BWP. Here, an activated DL/UL BWP is defined as an active DL/UL BWP. But, a configuration on a DL/UL BWP may not be received when a terminal performs an initial access procedure or before a RRC connection is set up, so a DL/UL BWP which is assumed by a terminal under these situations is defined as an initial active DL/UL BWP.

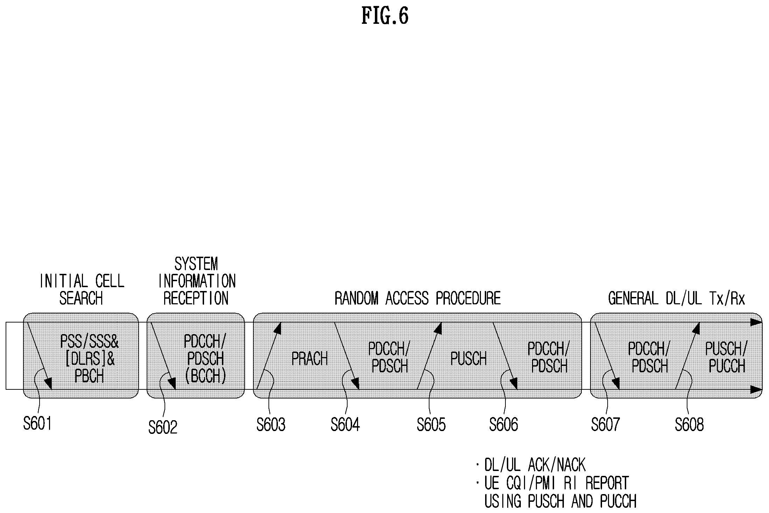

FIG. 6 illustrates physical channels used in a wireless communication system to which the present disclosure may be applied and a general signal transmission and reception method using them.

In a wireless communication system, a terminal receives information through a downlink from a base station and transmits information through an uplink to a base station. Information transmitted and received by a base station and a terminal includes data and a variety of control information and a variety of physical channels exist according to a type/a usage of information transmitted and received by them.

When a terminal is turned on or newly enters a cell, it performs an initial cell search including synchronization with a base station or the like (S601). For the initial cell search, a terminal may synchronize with a base station by receiving a primary synchronization signal (PSS) and a secondary synchronization signal (SSS) from a base station and obtain information such as a cell identifier (ID), etc. After that, a terminal may obtain broadcasting information in a cell by receiving a physical broadcast channel (PBCH) from a base station. Meanwhile, a terminal may check out a downlink channel state by receiving a downlink reference signal (DL RS) at an initial cell search stage.

A terminal which completed an initial cell search may obtain more detailed system information by receiving a physical downlink control channel (PDCCH) and a physical downlink shared channel (PDSCH) according to information carried in the PDCCH (S602).

Meanwhile, when a terminal accesses to a base station for the first time or does not have a radio resource for signal transmission, it may perform a random access (RACH) procedure to a base station (S603 to S606). For the random access procedure, a terminal may transmit a specific sequence as a preamble through a physical random access channel (PRACH) (S603 and S605) and may receive a response message for a preamble through a PDCCH and a corresponding PDSCH (S604 and S606). A contention based RACH may additionally perform a contention resolution procedure.

A terminal which performed the above-described procedure subsequently may perform PDCCH/PDSCH reception (S607) and PUSCH(Physical Uplink Shared Channel)/PUCCH(physical uplink control channel) transmission (S608) as a general uplink/downlink signal transmission procedure. In particular, a terminal receives downlink control information (DCI) through a PDCCH. Here, DCI includes control information such as resource allocation information for a terminal and a format varies depending on its purpose of use.

Meanwhile, control information which is transmitted by a terminal to a base station through an uplink or is received by a terminal from a base station includes a downlink/uplink ACK/NACK(Acknowledgement/Non-Acknowledgement) signal, a CQI(Channel Quality Indicator), a PMI(Precoding Matrix Indicator), a RI(Rank Indicator), etc. For a 3GPP LTE system, a terminal may transmit control information of the above-described CQI/PMI/RI, etc. through a PUSCH and/or a PUCCH.

Table 5 represents an example of a DCI format in an NR system.

[Table 5]

| DCI Format | Use |
|------------|-----|
| 0_0 | Scheduling of a PUSCH in one cell |
| 0_1 | Scheduling of one or multiple PUSCHs in one cell, or indication of cell group downlink feedback information to a UE |
| 0_2 | Scheduling of a PUSCH in one cell |
| 1_0 | Scheduling of a PDSCH in one DL cell |
| 1_1 | Scheduling of a PDSCH in one cell |
| 1_2 | Scheduling of a PDSCH in one cell |

In reference to Table 5, DCI formats 0_0, 0_1 and 0_2 may include resource information (e.g., UL/SUL(Supplementary UL), frequency resource allocation, time resource allocation, frequency hopping, etc.), information related to a transport block(TB) (e.g., MCS(Modulation Coding and Scheme), a NDI(New Data Indicator), a RV(Redundancy Version), etc.), information related to a HARQ(Hybrid - Automatic Repeat and request) (e.g., a process number, a DAI(Downlink Assignment Index), PDSCH-HARQ feedback timing, etc.), information related to multiple antennas (e.g., DMRS sequence initialization information, an antenna port, a CSI request, etc.), power control information (e.g., PUSCH power control, etc.) related to scheduling of a PUSCH and control information included in each DCI format may be pre-defined.

CI format 0_0 is used for scheduling of a PUSCH in one cell. Information included in DCI format 0_0 is CRC (cyclic redundancy check) scrambled by a C-RNTI(Cell Radio Network Temporary Identifier) or a CS-RNTI(Configured Scheduling RNTI) or a MCS-C-RNTI(Modulation Coding Scheme Cell RNTI) and transmitted.

DCI format 0_1 is used to indicate scheduling of one or more PUSCHs or configure grant (CG) downlink feedback information to a terminal in one cell. Information included in DCI format 0_1 is CRC scrambled by a C-RNTI or a CS-RNTI or a SP-CSI-RNTI(Semi-Persistent CSI RNTI) or a MCS-C-RNTI and transmitted.

DCI format 0_2 is used for scheduling of a PUSCH in one cell. Information included in DCI format 0_2 is CRC scrambled by a C-RNTI or a CS-RNTI or a SP-CSI-RNTI or a MCS-C-RNTI and transmitted.

Next, DCI formats 1_0, 1_1 and 1_2 may include resource information (e.g., frequency resource allocation, time resource allocation, VRB(virtual resource block)-PRB(physical resource block) mapping, etc.), information related to a transport block(TB)(e.g., MCS, NDI, RV, etc.), information related to a HARQ (e.g., a process number, DAI, PDSCH-HARQ feedback timing, etc.), information related to multiple antennas (e.g., an antenna port, a TCI(transmission configuration indicator), a SRS(sounding reference signal) request, etc.), information related to a PUCCH (e.g., PUCCH power control, a PUCCH resource indicator, etc.) related to scheduling of a PDSCH and control information included in each DCI format may be pre-defined.

DCI format 1_0 is used for scheduling of a PDSCH in one DL cell. Information included in DCI format 1_0 is CRC scrambled by a C-RNTI or a CS-RNTI or a MCS-C-RNTI and transmitted.

DCI format 1_1 is used for scheduling of a PDSCH in one cell. Information included in DCI format 1_1 is CRC scrambled by a C-RNTI or a CS-RNTI or a MCS-C-RNTI and transmitted.

DCI format 1_2 is used for scheduling of a PDSCH in one cell. Information included in DCI format 1_2 is CRC scrambled by a C-RNTI or a CS-RNTI or a MCS-C-RNTI and transmitted.

Communication methods related to the Internet of Things (IoT)

Recently, IoT technology and its utilization have been receiving attention, and technologies for installing and connecting a larger number of IoT devices (e.g., technologies for reducing the size, complexity, and power consumption of IoT devices) are being continuously researched. For example, scenarios, use cases, and key performance indicators (KPIs) for IoT devices are being discussed within 3GPP-based communication systems (i.e., 3GPP IoT).

Specifically, 3GPP IoT can be applied to devices with ultra-low power consumption and ultra-low complexity. In addition, in terms of energy storage, 3GPP IoT can be applied to battery-less devices that depend on external energy sources (i.e., devices without energy storage capacity) or/and devices with limited energy storage capacity (e.g., devices that do not require manual battery replacement or recharging).

The device classification based on energy source, energy storage capacity, passive/active transmission, etc., as described above, can be discussed in relation to the relevant use case. The maximum power consumption of a device should be limited by the practical form factor for the intended use case, which may take into account the energy source.

3GPP IoT can be applied to indoor/outdoor environments, base station characteristics (e.g., macro/micro/pico cell-based deployment), connection topology (e.g., nodes that can communicate with target devices such as base stations, terminals, relay terminals, repeaters, etc.), TDD/FDD and licensed/unlicensed spectrum frequency bands, coexistence of terminals and infrastructure in frequency bands of 3GPP technologies, assumption of device-initiated/-terminated traffic, etc.

In one embodiment of the present disclosure, three types of IoT devices may be utilized.

- Device A: A device that does not store energy and does not generate independent signals (i.e., backscattering transmission).
- Device B: A device that stores energy and does not generate an independent signal (i.e., backscattering transmission), and the use of stored energy may include amplification of reflected signals.
- Device C: A device that stores energy and generates an independent signal (i.e., includes active RF components for transmission).

The present disclosure relates to a method for transmitting and receiving signals between devices A and B, which perform communication via backscattering transmission among three types of devices. However, this is merely one embodiment, and various embodiments of the present disclosure may also be applied to device C.

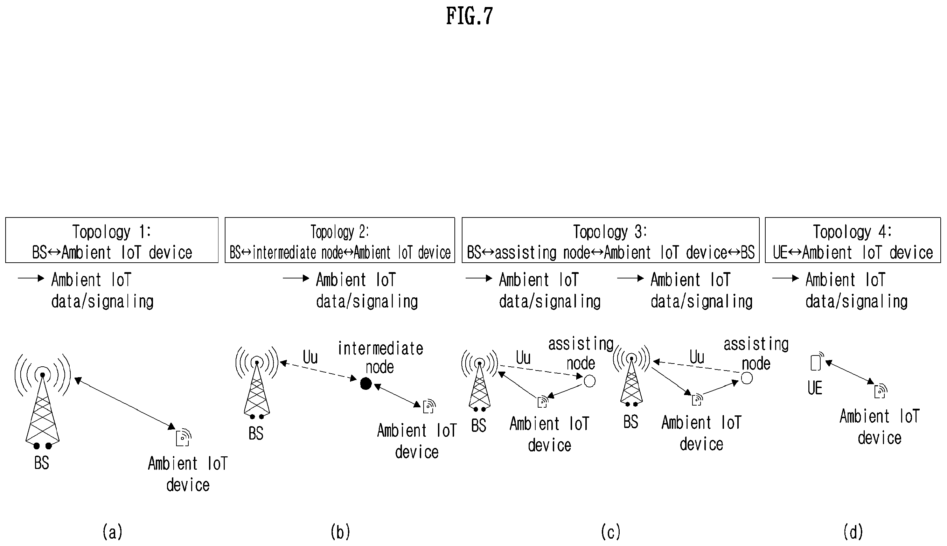

Additionally, as an example of the present disclosure, at least one of the following four topologies may be applied, as illustrated in FIG. 7.

- Topology (1): BS <-> Ambient IoT Device
- Topology (2): BS <-> Intermediate Node <-> Ambient IoT Device
- Topology (3): BS <-> Assisting Node <-> Ambient IoT Device <-> BS
- Topology (4): UE <-> Ambient IoT Device

Here, the BS may be included in or replaced by the gNB, and may be a distribution unit (gNB-DU) of the gNB. Additionally, the ambient IoT device may be replaced by a UE or a remote UE. The intermediate node may be at least one of a relay node, an integrated access backhaul (IAB) node, a relay UE, or a repeater of the network.

For example, for topology (1), the possibility of BS Rx and BS Tx may be included in different BSs. For topologies (2) and (3), the intermediate nodes and auxiliary nodes may be relay terminals, IAB nodes, repeaters, etc. that enable ambient IoT.

The present disclosure describes a method of transmitting and receiving signals in topologies 1 and 2, in which direct communication (i.e., mono-static communication) is performed between a base station (or/and intermediate node) and an IoT device among four topologies. However, this is only one embodiment, and the present disclosure may also be applied to topology 3 and/or topology 4.

In describing the present disclosure, "/" means "and", "or", or "and/or" depending on the context.

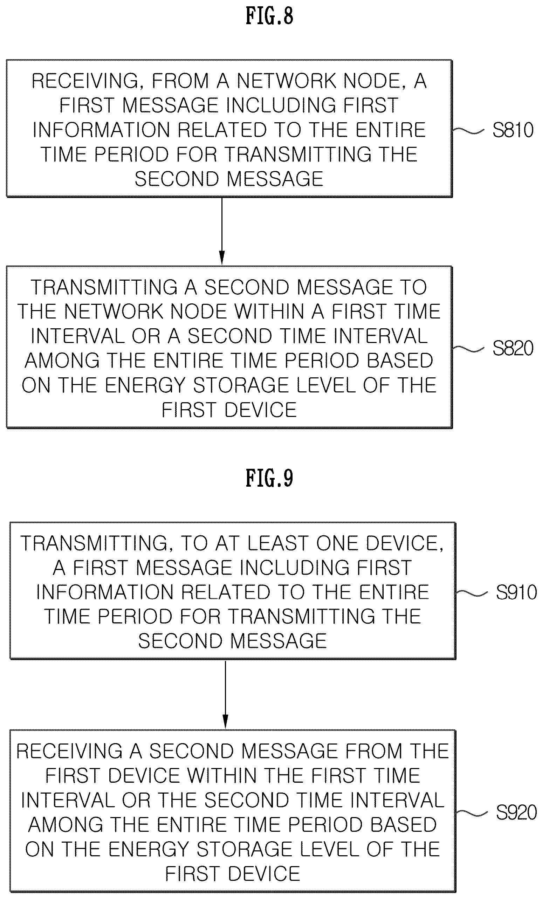

FIG. 8 is a flowchart illustrating a method performed by a first device according to one embodiment of the present disclosure.

In FIGS. 8 and 9, the first device may be an ambient IoT device or/and a terminal (UE), and the network node may collectively refer to a reader device (e.g., a BS, a gNB, an intermediate node, a UE, etc.). For example, if the first device is an ambient IoT device or a first terminal, the network node may be one of a BS, a gNB, an intermediate node, or a second terminal.

The first device may receive a first message from a network node, which includes first information related to the entire time period for transmitting the second message (S810).

For example, the first device may monitor the reception of a first message from a network node, such as through a carrier sensing procedure.

Here, the first message may correspond to MSG0 described below, and the second message may correspond to MSG1. The first message may include at least one of access-related system information or information for resolving a collision, and the access-related system information may include at least one of information indicating whether the access is possible, second information related to the first message, or a timer value for the access.

And, the second information may include at least one of i) the time of transmission or reception of the first message, ii) a time offset based on the time of transmission or reception of the first message, or iii) the length or pattern of the entire time period.

Additionally or alternatively, when the entire time period is divided into multiple time intervals, the first device may receive information about the multiple time intervals from the network node. As another example, the entire time period may be classified/divided into multiple time intervals according to predefined rules.

For example, whether to transmit the second message of the first device may be determined based on information indicating whether the access is available. For example, the information indicating whether the access is available may indicate the access-related state (e.g., BUSY or IDLE). If the access-related state is IDLE, the first device may determine that transmission of the second message is possible.

The device may transmit a second message to the network node within a first time interval or a second time interval among the entire time period based on the energy storage level of the first device (S820).

That is, the device may determine the time interval and/or resources (e.g., time resources, frequency resources, etc.) to transmit the second message based on the remaining energy storage level within the first device.

Here, the starting point of the entire time period can be determined based on the second information related to the first message. For example, the starting point of the entire time period can be a point in time after a time offset based on the time of transmission or reception of the first message.

For example, based on the energy storage level of the first device being less than or equal to a first threshold, the first device may transmit the second message to the network node within a first time interval. As another example, based on i) the energy storage level of the first device being greater than the first threshold but less than or equal to a second threshold, or ii) the energy storage level of the first device being greater than the first threshold, the first device may transmit the second message to the network node within a second time interval.

As another example, assume that the first device transmits the second message to the network node within a second time interval based on the energy storage level of the first device being greater than the first threshold and less than or equal to the second threshold. In this case, the first device can transmit the second message to the network node within a third time interval among the entire time intervals based on the energy storage level of the first device being greater than the second threshold.

The sum of the lengths of the first time interval, the second time interval, and/or the third time interval may be equal to, but is not limited to, the entire time period length.

Here, at least one of the first threshold or the second threshold may be predefined or configured/indicated by a node in the network.

Additionally or alternatively, based on the energy storage level of the first device being less than or equal to a first threshold, the first device may transmit the second message to the network node using a first transmission resource among a plurality of transmission resources (e.g., frequency resources, time resources, space resources, etc.). As another example, i) based on the energy storage level of the first device being greater than or equal to a second threshold or ii) based on the energy storage level of the first device being greater than the first threshold, the first device may transmit the second message to the network node using a second transmission resource among the plurality of resource transmissions.

As another example, assume that the first device transmits the second message to the network node using the second transmission resource based on the energy storage level of the first device being greater than the first threshold and less than or equal to the second threshold. In this case, the first device may transmit the second message to the network node using the third transmission resource among the plurality of transmission resources based on the energy storage level of the first device being greater than the second threshold.

Here, information for configuring multiple transmission resources can be transmitted from the network node to the first device via the first message or a separate message.

The first resource may receive a third message corresponding to the second message from the network node. Here, the third message may correspond to MSG 2 described below, and may include ACK (acknowledgement) information or NACK (negative acknowledgment) information for the second message.

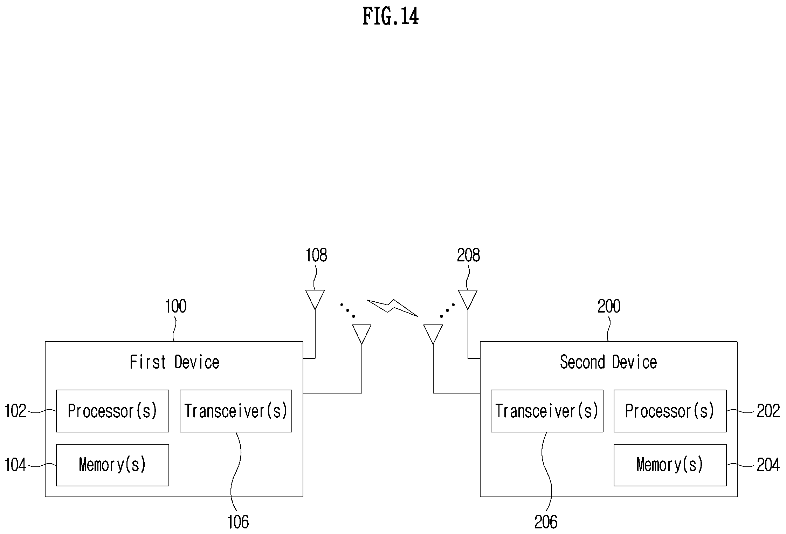

The method described in the example of FIG. 8 can be performed by the first device (100) of FIG. 14. That is, the first device of FIG. 8 can be implemented as the first device (100). For example, one or more processors (102) of the first device (100) of FIG. 14 can receive a first message including first information related to the entire time period for transmitting a second message from a network node through one or more transceivers (106). The one or more processors

(102) can transmit the second message to the network node through one or more transceivers (106) within the first time interval or the second time interval among the entire time period based on the energy storage level of the first device.

Furthermore, one or more memories (104) of the first device (100) may store commands for performing the method described in the example of FIG. 14 or the examples described below when executed by one or more processors (102).

FIG. 9 is a flowchart illustrating a method performed by a network node according to one embodiment of the present disclosure.

The network node may transmit a first message including first information related to the entire time period for transmitting the second message to at least one device including the first device (S910).

The network node may transmit access-related system information, etc. to the first device via the first message, and the first message may include a query signal and/or PDCCH order information, etc. For example, the network node may transmit information about the entire time period during which the second message can be transmitted to the first device via the first message.

The network node may receive a second message from the first device within the first time interval or the second time interval among the entire time period based on the energy storage level of the first device (S920).

The process by which a network node receives a second message from a first device within a specific time interval among the entire time period has been described with reference to FIG. 8, so a duplicate description will be omitted.

The method described in the example of FIG. 9 can be performed by the second device (200) of FIG. 14. That is, the network node of FIG. 9 can be implemented as the second device (200). For example, one or more processors (202) of the second device (200) of FIG. 14 can transmit a first message including first information related to the entire time period for transmitting the second message to the first device through one or more transceivers (206). The one or more processors (202) can receive the second message from the first device through one or more transceivers (206) within the first time interval or the second time interval among the entire time period based on the energy storage level of the first device.

Furthermore, one or more memories (204) of the second device (200) may store commands for performing the method described in the example of FIG. 14 or the examples described below when executed by one or more processors (202).

Hereinafter, a method of transmitting and receiving signals between an ambient IoT device and a (transmitting/receiving) reader device (e.g., BS, gNB, intermediate node, UE, etc.) will be specifically described. In the following embodiments, the ambient IoT device that performs communication with various reader devices may be expressed as a terminal (UE) or a device. That is, when the ambient IoT device is implemented as a UE, the reader device may be implemented as a BS, gNB, intermediate node, etc. As another example, when the ambient IoT device is implemented as a separate (IoT) device, the reader device may be implemented as a BS, gNB, intermediate node, UE, etc.

Embodiment 1

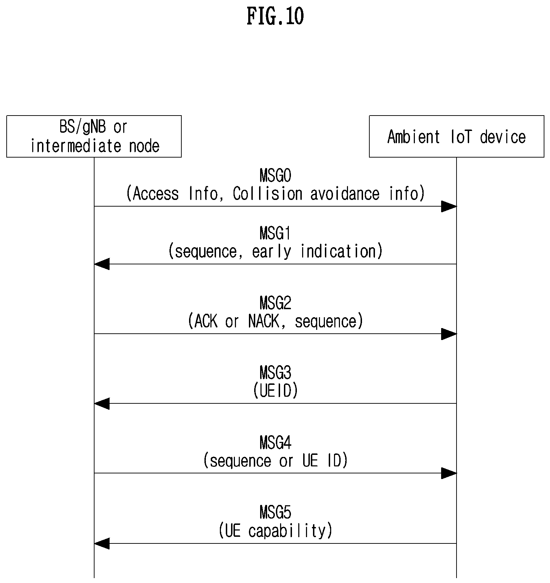

Embodiment 1 relates to a process for an ambient IoT device to access a reader device. As an example of the present disclosure, FIG. 10 is a flowchart for explaining a process for an ambient IoT device to access a reader device. Specifically, the access process may be composed of an MSG0 transmission/reception process (Embodiment 1-1), an MSG1 transmission/reception process (Embodiment 1-2), an MSG2 transmission/reception process (Embodiment 1-3), an MSG3 transmission/reception process (Embodiment 1-4), an MSG4 transmission/reception process, and an MSG5 transmission/reception process (Embodiment 1-5). In addition, the DTX (discontinuous transmission) period and offset of the MSG may be set/defined (Embodiment 1-6).

Embodiment 1-1

As an example of the present disclosure, the reader device may transmit MSG0 (e.g., a query signal or/and PDCCH order, etc.) to the ambient IoT device.

For example, if MSG0 is a query signal, the terminal can determine whether to transmit MSG1 based on MSG0. MSG0 can be used as a DL sync signal, such as PSS/SSS. For example, MSG0 can be reused as a DL sync signal, such as PSS/SSS, or defined as a new sync signal.

The ambient IoT device may monitor MSG0 for carrier sensing-based connectivity. MSG0 may include information indicating whether the ambient IoT device can connect to the reader device (e.g., whether the ambient IoT device can transmit MSG1). For example, if MSG0 includes information indicating "busy" or/and "idle," the ambient IoT device may determine that it can transmit MSG1 within a certain period of time.

Additionally or alternatively, ambient IoT devices may use the carrier of another device to avoid collisions. For example, (ambient IoT) device 2 may detect the carrier transmitted by device 1 and avoid accessing it for a period of time after the detected carrier.

Here, MSG0 may include access-related system information. For example, the access-related system information may include a timer value for access operation, information related to a time period during which MSG1 transmission is possible (e.g., information related to a start time, length, window pattern, etc.). Additionally or alternatively, the access-related system information may be transmitted through a separate MSG 0 for each specific device type, and the MSG 0 may indicate that the system information applies only to the specific device type.

Additionally or alternatively, MSG0 may include information for resolving conflicts. For example, MSG0 may include probability-based access information, UE ID-based access information, early indication-based access information, UE group/type-based access information, service/access type-based access information, etc.

Additionally or alternatively, an ambient IoT device that detects the transmission of a message (e.g., MSG0, MSG2, MSG4, etc.) to another device may not transmit MSG 1. However, if the ambient IoT device does not detect the message for a certain period of time, the ambient IoT device may transmit MSG 1.

For example, an ambient IoT device may monitor MSG0 to determine whether the access to a reader device is permitted. If MSG0 indicates "Busy" or "Idle," the ambient IoT device may connect to the reader device only after the "Idle" indication.

Embodiment 1-2

The ambient IoT device may (re)transmit MSG1 to the reader device. For example, the ambient IoT device may (re)transmit MSG1 to the reader device using a backscattering method. The method described below can also be applied to transmitting and receiving messages after MSG1 (e.g., MSG 3/5, etc.).

As an example of the present disclosure, when MSG1 is transmitted in a slotted ALOHA manner, the ambient IoT device can transmit MSG1 at a time aligned with a specific time point (e.g., a transmission time of a DL sync signal or MSG0 transmitted by a reader device, a CW (carrier wave) transmission time, a backscattering transmission time (e.g., ambient IoT device A or B), etc.). The slotted ALOHA manner is a method of transmitting data by unit time (e.g., slot). As another example, the ambient IoT device can transmit MSG1 by selectively backscattering CW.

Additionally, MSG 1 may include a sequence for collision avoidance. The sequence for collision avoidance may be determined based on at least one of the options described below.

Option 1 : Random sequence selection
Option 1A: Random sequence + early indication or UE group/type/service/connection type indication

When Option 1A is applied, the ambient IoT device may transmit MSG1 in the form of attaching an early indication or UE group/type/service/connection type indication before or after a randomly selected sequence. In this case, the indication may correspond to a sequence according to Option 3, Option 4, or Option 5, etc.

Option 1B: Select a random sequence from a cell-specific sequence pool.

When Option 1B applies, the ambient IoT device may receive sequence-related information from the reader device or randomly select a sequence from a preset sequence pool.

Option 2: Device-dedicated sequence

When Option 2 applies, the ambient IoT device may receive sequence-related information from the reader device or transmit a preset device-specific sequence.

Option 3: Early indication-based sequence selection

When Option 3 is applied, the ambient IoT device may transmit a sequence that is mapped to an early indication. Here, the early indication may collectively refer to an indicator that indicates the type or capability of the device (or terminal).

Option 4: UE Group/Type Based Sequence Selection

When Option 4 applies, the ambient IoT device may transmit a sequence mapped to a UE group/type.

Option 5: Sequence selection based on service/access type

When Option 5 applies, the ambient IoT device may transmit a sequence that maps to the service or access type it is currently trying to access.

Option 6: Channel quality-based sequence

The ambient IoT device may measure the signal transmitted by the reader device and transmit MSG1 with a sequence mapped to the measured value. For example, if the measured value is less than or equal to threshold 1, the ambient IoT device may select a sequence from the first sequence pool. If the measured value is greater than threshold 1 but less than or equal to threshold 2, the ambient IoT device may select a sequence from the second sequence pool.

Depending on the sequence, early indication, UE group/type, service/access type or channel quality level selected through at least one of the above-described options, the ambient IoT device can determine the (backscattering-based) transmission time and/or reception time of MSG1, MSG2, MSG3, MSG4 or/and MSG5. For example, depending on the UE group/type or service/access type, a subsequent specific MSG transmission start time, a specific MSG reception start time, a specific MSG transmission interval or a specific MSG reception interval can be determined.

Additionally or alternatively, based on a sequence, early indication, UE group/type, service/access type or channel quality level selected through at least one of the above-described options, the ambient IoT device may determine the transmission/reception resources/time/frequency of MSG1, MSG2, MSG3, MSG4 or/and MSG5. Accordingly, the ambient IoT device may transmit and receive MSG1, MSG2, MSG3, MSG4 or/and MSG5 based on the determined resources/time frequency.

When an ambient IoT device transmits MSG 1, at least one of the methods described below may be applied to resolve a collision. That is, the ambient IoT device may distribute MSG1 transmission using at least one of the methods described below.

Method 1: Distribution over multiple frequencies

Method 1 is a method in which an ambient IoT device selects one MSG1 frequency among multiple MSG1 frequencies and transmits MSG1 using the selected frequency. The ambient IoT device may configure multiple MSG1 frequencies (e.g., via MSG0), or multiple MSG1 frequencies may be preconfigured/defined. The distribution method through multiple frequencies may include a probability-based distribution method, a UE ID/sequence-based distribution method, a UE-only signaling method (based on presetting rather than for initial access), a channel quality-based distribution method, a beam/SSB index-based distribution method, and/or a UE group/type-based sequence selection method.

As an example of the present disclosure, when a probability-based distribution method is applied, the ambient IoT device may select the MSG1 frequency based on preset probability information and/or probability information received through MSG0. For example, the ambient IoT device may select a value between 0 and 1 immediately before transmitting MSG1. If the selected value exceeds a threshold value configured by the reader device or a preset threshold value, the ambient IoT device may select a first frequency among the plurality of MSG1 frequencies. If the selected value is less than or equal to the threshold value set by the reader device or a preset threshold value, the ambient IoT device may select a second frequency among the plurality of MSG1 frequencies.

As an example of the present disclosure, when a UE ID/sequence based distribution method is applied, the ambient IoT device may select the MSG1 frequency according to the MSG1 sequence selected according to the above-described option or according to the pre-allocated UE ID.

As an example of the present disclosure, when a UE-only signaling scheme (based on pre-configuration rather than initial access) is applied, the ambient IoT device may transmit MSG1 using a frequency determined according to the UE-only signal. The UE-only signal may be pre-stored configuration information or a message notified in advance by the reader device.

As an example of the present disclosure, when a channel quality-based distribution method is applied, the ambient IoT device may measure a signal transmitted by the reader device and transmit MSG1 using a frequency mapped to the measured value. Here, the measured signal may be a DL sync signal or MSG0. For example, when the measured value is less than or equal to a threshold value 1, the ambient IoT device may select a first frequency among a plurality of MSG1 frequencies. When the measured value is greater than or equal to a threshold value 1 and less than or equal to a threshold value 2, the ambient IoT device can select a second frequency among a plurality of MSG1 frequencies.

As another example, when a channel quality-based distribution method is applied, the ambient IoT device may measure a signal transmitted by the reader device and transmit an MSG1 resource mapped to the measured value. Here, the measured signal can be a DL sync signal or MSG0. For example, if the measured value is less than or equal to a threshold value 1, the ambient IoT device may select a first resource among a plurality of resources. If the measured value is greater than the threshold value 1 and less than or equal to a threshold value 2, the ambient IoT device can select a second resource among the plurality of resources. The plurality of resources can be set or predefined by the reader device, etc.

As an example of the present disclosure, when a beam/SSB index-based distribution method is applied, the ambient IoT device may measure the beam RS or SSB transmitted by the reader device, and transmit MSG1 using a frequency or resource mapped to a best RS index, a best SSB index, or an RS/SSB greater than or equal to a threshold value. For example, if an SSB having an SSB index value of 0 is the best SSB or a measurement value of the SSB is greater than or equal to a threshold value, the ambient IoT device may select a first frequency/resource among a plurality of MSG1 frequencies/resources. For example, if an SSB having an SSB index value of 1 is the best SSB or a measurement value of the SSB is greater than or equal to a threshold value, the ambient IoT device may select a second frequency/resource among a plurality of MSG1 frequencies/resources.

As an example of the present disclosure, when a UE group/type-based sequence selection method is applied, an ambient IoT device may select a frequency (among multiple MSG1 frequencies) mapped to a UE group/type and transmit MSG1 using the selected frequency.

As an example of the present disclosure, when a service/access type-based sequence selection method is applied, an ambient IoT device may select a frequency (among multiple MSG1 frequencies) mapped to a service or access type to which it is currently attempting to access and transmit MSG1 using the selected frequency.

Method 2: Time-based distribution method

The time-based distribution method is a method in which the ambient IoT device selects a specific point in time/slot within a time interval for MSG1 transmission and transmits MSG1 within the selected specific point in time/slot. The ambient IoT device may configure the time interval for MSG1 transmission (via MSGO), or the time interval for MSG1 transmission may be determined according to a predefined rule. The ambient IoT device may select the MSG1 transmission point in time/slot using at least one of the methods described below. In this case, the MSG1 transmission interval/point in time/slot may be determined as a point in time that is a positive/negative offset from the CW transmission/reception point in time.

As an example of the present disclosure, when a probability-based distribution method is applied, the ambient IoT device may select a MSG1 transmission time/slot within the MSG 1 time interval according to preset probability information or probability information received from MSG0. For example, the ambient IoT device may select a specific value between 0 and 1 immediately before transmitting MSG1. If the selected specific value is preset by the reader device or exceeds a preset threshold, the ambient IoT device may select a first transmission time interval/transmission time/slot (within the time interval for MSG1 transmission). If the selected specific value is preset by the reader device or is lower than a preset threshold, the ambient IoT device may select a second transmission time interval/transmission time/slot (within the time interval for MSG1 transmission). Then, the ambient IoT device may transmit MSG 1 in the selected transmission time interval/transmission time/slot.

As an example of the present disclosure, when a UE ID/sequence based distribution method is applied, the ambient IoT device may select an MSG1 transmission time point/slot within the time interval for MSG 1 transmission according to the MSG1 sequence selected according to the above-described option or the pre-allocated UE ID. For example, when the result value of sequence mode N or UE ID mod N is 0, the ambient IoT device can select the first transmission time interval/transmission time point/slot (within the time interval for MSG 1 transmission). When the result value of sequence mode N or UE ID mod N is 1, the ambient IoT device can select the second transmission time interval/transmission time point/slot (within the time interval for MSG 1 transmission).

As an example of the present disclosure, when a UE-only signaling scheme (based on pre-configuration rather than initial access) is applied, the ambient IoT device can transmit MSG1 through a MSG1 transmission time interval/point/slot determined according to the UE-only signal. The UE-only signal can be pre-stored configuration information or a message notified in advance by the reader device.

As an example of the present disclosure, when a channel quality-based distribution method is applied, the ambient IoT device may measure a signal transmitted by the reader device and transmit MSG1 using a transmission time interval/point in time/slot within a time interval mapped to the measured value. Here, the measured signal can be a DL sync signal or MSG0. For example, when the measured value is less than or equal to a threshold value 1, the ambient IoT device may select the first time interval/point in time/slot (within the time interval for transmitting MSG1). When the measured value is greater than or equal to a threshold value 1 and less than or equal to a threshold value 2, the ambient IoT device may select the second time interval/point in time/slot (within the time interval for transmitting MSG1).

In another example of the present disclosure, when a channel quality-based distribution method is applied, the ambient IoT device may measure a signal transmitted by the reader device and transmit an MSG1 resource mapped to the measured value. Here, the measured signal may be a DL sync signal or MSG0. For example, when the measured value is less than or equal to a threshold value 1, the ambient IoT device may select a first resource among a plurality of resources. When the measured value is greater than or equal to a threshold value 1 and less than or equal to a threshold value 2, the ambient IoT device may select a second resource among a plurality of resources. Here, the resource can be determined by frequency and/or time.

As an example of the present disclosure, when a beam/SSB index-based distribution method is applied, the ambient IoT device may measure the beam RS or SSB transmitted by the reader device, and transmit MSG1 using a transmission time interval/point in time/slot or resource within a time interval mapped to a best RS index, a best SSB index, or an RS/SSB greater than or equal to a threshold value. For example, if an SSB having an SSB index value of 0 is the best SSB or the measured value of the SSB is greater than or equal to a threshold value, the ambient IoT device may select a first transmission time interval/point in time/slot or resource (within the time interval for MSG1 transmission). For example, if an SSB having an SSB index value of 1 is the best SSB or the measured value of the SSB is greater than or equal to a threshold value, the ambient IoT device may select a second transmission time interval/point in time/slot or resource (within the time interval for MSG1 transmission).

As an example of the present disclosure, when an energy storage based distribution method is applied, the ambient IoT device may measure the remaining energy storage level of the device and transmit MSG1 using a specific time interval/transmission point/slot within the time interval mapped to the measured value. For example, when the measured value (i.e., the energy storage level of the ambient IoT device) is less than or equal to a threshold value 1, the ambient IoT device can select the first transmission time interval/point/slot or resource (within the time interval for transmitting MSG1). When the measured value is greater than the threshold value 1 and less than or equal to a threshold value 2, the ambient IoT device can select the second transmission time interval/point/slot or resource (within the time interval for transmitting MSG1). In this case, the lower the remaining energy storage level, the more likely the ambient IoT device is to select a faster transmission time interval/point/slot.

As an example of the present disclosure, when an energy storage-based distribution method is applied, the ambient IoT device may measure the remaining energy storage level of the device and transmit an MSG1 resource mapped to the measured value. For example, when the measured value (i.e., the energy storage level of the ambient IoT device) is less than or equal to a threshold value 1, the ambient IoT device can select a first resource among a plurality of resources. When the measured value is greater than the threshold value 1 and less than or equal to a threshold value 2, the ambient IoT device can select a second resource among the plurality of resources. Here, the resource can be determined by frequency/time.

As an example of the present disclosure, when a UE group/type-based sequence selection method is applied, an ambient IoT device may select a transmission time interval/point/slot mapped to a UE group/type (within a time interval for MSG1 transmission) and transmit MSG1 using the selected transmission time interval/point/slot.

As an example of the present disclosure, when a service/access type-based sequence selection method is applied, the ambient IoT device may select a transmission time interval/point/slot mapped to a service or access type to which it is currently trying to connect (within the time interval for MSG1 transmission), and transmit MSG1 using the selected transmission time interval/point/slot.

As an example of the present disclosure, when a priority-based distribution scheme is applied, the ambient IoT device may select a transmission time interval/slot/point in time (for MSG1 transmission) based on the device priority or the priority of the access to which it is currently trying to connect, and transmit MSG1 at the selected transmission time interval/slot/point in time. For example, in an access procedure with high priority, or the device may select a short first transmission time interval/point in time/slot (within the time interval for MSG1 transmission), and transmit MSG1 using the selected first transmission time interval/point in time/slot. In an access procedure with low priority, or the device may select a long second transmission time interval/point in time/slot or resource (within the time interval for MSG1 transmission), and transmit MSG1 using the selected second transmission time interval/point in time/slot.

The ambient IoT device may transmit MSG1 to the reader device according to at least one of the above-described methods. Here, the device may probabilistically determine whether to actually transmit MSG1. For example, if the predefined/configured probability value is a specific value (e.g., 0.3), the ambient IoT device may select a random number. If the random number is less than or equal to the specific value, the ambient IoT device may transmit MSG1. If the random number exceeds the specific value, the ambient IoT device may not transmit MSG1 and may start a timer for back-off.

After back-off (i.e., after the timer for back-off expires), the ambient IoT device may perform MSG1 retransmission according to at least one of the above-described methods. Additionally or alternatively, if MSG2 or/and MSG4 are not received, if MSG 2 or/and MSG4 do not contain a sequence or UE ID of the ambient IoT device, if MSG 2 or/and MSG4 do not indicate ACK, or/and if MSG 2 or/and MSG4 indicate NACK, the ambient IoT device may perform back-off.

After back-off (i.e., after the timer for back-off expires), the ambient IoT device may perform MSG1 retransmission according to at least one of the above-described methods. The ambient IoT device may retransmit MSG1 after selecting/determining a back-off time (i.e., a timer value) according to at least one of the methods described below. The ambient IoT device can obtain the selectable back-off time values from MSG 0, MSG 2, or/and MSG 4, or from pre-stored information/system information.

As an example of the present disclosure, when a probability-based back-off time method is applied, the ambient IoT device may select a back-off time based on preset probability information or probability information received from MSG0. For example, the ambient IoT device may select a specific value between 0 and 1 immediately before transmitting MSG1. If the selected specific value is preset by the reader device or exceeds a preset threshold, the ambient IoT device may select a first back-off time (from among the plurality of back-off times). If the selected specific value is preset by the reader device or is lower than or equal to a preset threshold, the ambient IoT device may select a second back-off time (from among the plurality of back-off times). Then, the ambient IoT device may transmit MSG 1 based on the selected back-off time.

As an example of the present disclosure, when a UE ID/sequence based back-off time scheme is applied, the ambient IoT device may select a back-off time according to the MSG1 sequence selected according to the above-described option or the pre-assigned UE ID. For example, when the result value of sequence mode N or UE ID mod N is 0, the ambient IoT device may select a first back-off time (from among the plurality of back-off times). When the result value of sequence mode N or UE ID mod N is 1, the ambient IoT device may select a second back-off time (from among the plurality of back-off times). Here, N may be equal to the number of selectable back-off times.

As an example of the present disclosure, when a UE-only signaling scheme (based on pre-configuration rather than initial access) is applied, the ambient IoT device may transmit MSG1 based on a back-off time determined according to the UE-only signal. The UE-only signal may be pre-stored configuration information or a message notified in advance by the reader device.

As an example of the present disclosure, when a channel quality-based distribution method is applied, the ambient IoT device can measure a signal transmitted by the reader device and transmit MSG1 using a back-off time mapped to the measured value. Here, the measured signal may be a DL sync signal or MSG0. For example, when the measured value is less than or equal to a threshold value 1, the ambient IoT device may select a first back-off time (from among a plurality of back-off times). When the measured value is greater than or equal to a threshold value 1 and less than or equal to a threshold value 2, the ambient IoT device can select a second back-off time (from among a plurality of back-off times).

As an example of the present disclosure, when a beam/SSB index-based distribution method is applied, the ambient IoT device may measure the beam RS or SSB transmitted by the reader device, and transmit MSG1 using a back-off time mapped to a best RS index, a best SSB index, or an RS/SSB greater than or equal to a threshold value. For example, if an SSB having an SSB index value of 0 is the best SSB or a measurement value of the SSB is greater than or equal to a threshold value, the ambient IoT device may select a first back-off time (from among a plurality of back-off times). For example, if an SSB having an SSB index value of 1 is the best SSB or a measurement value of the SSB is greater than or equal to a threshold value, the ambient IoT device may select a second back-off time (from among a plurality of back-off times).

As an example of the present disclosure, when an energy storage-based distribution method is applied, the ambient IoT device may measure the remaining energy storage level of the device and transmit MSG1 using a back-off time mapped to the measured value. For example, when the measured value (i.e., the energy storage level of the ambient IoT device) is less than or equal to a threshold value 1, the ambient IoT device may select a first back-off time (from among a plurality of back-off times). When the measured value is greater than the threshold value 1 and less than or equal to a threshold value 2, the ambient IoT device may select a second back-off time (from among a plurality of back-off times). In this case, the ambient IoT device may be configured to select a shorter back-off time as the remaining energy storage level decreases.

As an example of the present disclosure, when a UE group/type-based sequence selection method is applied, the ambient IoT device may select a back-off time mapped to a UE group/type (among multiple back-off times) and transmit MSG1 using the selected back-off time.

As an example of the present disclosure, when a service/access type-based sequence selection method is applied, the ambient IoT device may select a back-off time (among multiple back-off times) that is mapped to a service or ccess type to which it is currently trying to connect, and transmit MSG1 using the selected back-off time.

As an example of the present disclosure, when a priority-based distribution method is applied, the ambient IoT device may select a back-off time based on the device priority or the priority of the access to which it is currently trying to connect, and transmit MSG1 using the selected back-off time. For example, in the access procedure with a high priority, or the device may select a short first back-off time (from among a plurality of back-off times) that is mapped to a service or access type to which it is currently trying to connect, and transmit MSG1 using the selected first back-off time. In a access procedure with a low priority, or the device may select a long second back-off time (from among a plurality of back-off times) that is mapped to a service or access type to which it is currently trying to connect, and transmit MSG1 using the selected second back-off time.

Embodiment 1-3

The ambient IoT device may receive MSG2 (from the reader device) after performing (re)transmission of MSG1. In one example of the present disclosure, MSG2 may include/indicate ACK and/or NACK information. For example, if the reader device successfully receives MSG1 and allows access, MSG2 may include/indicate ACK. If the reader device does not successfully receive MSG1 and/or does not allow access, MSG2 may include/indicate NACK.

For example, if MSG2 includes/indicates ACK, MSG2 may include at least one of information included in MSG1 (e.g., sequence information), transmission/reception resources of MSG1 (e.g., time/frequency resources), time/frequency for transmitting/receiving MSGs (e.g., MSG0, MSG1, MSG2, MSG3, MSG4 and/or MSG5, etc.), or CW time/frequency information for backscattering. If MSG2 includes/indicates NACK, MSG2 may include a back-off time.

Embodiment 1-4

In one embodiment of the present disclosure, when an ACK including/indicating an ACK is received, the ambient IoT device may transmit MSG3 (to the reader device). For example, the ambient IoT device may transmit MSG3 in a backscattering manner. Selection of a time interval/point in time/frequency/resource for transmitting MSG3 may be determined/selected based on at least one of the transmission/reception time interval/point in time/frequency/resource selection methods of MSG2.

MSG3 may include at least one of UE ID, sequence, early indication, UE group/type, access type, RRC connection/resume request message for initial access, and C-RNTI MAC CE for UE within RRC_CONNECTED.

Here, the UE ID (e.g., C-RNTI) may be scrambled, masked, or attached to all UL messages. The sequence may be part or all of the sequence selected for MSG1. As another example, the sequence may be part or all of a newly selected sequence using at least one of the MSG1 sequence selection methods described above. The early indication may include the device type (e.g., device A, device B, or device C) and/or other processing times. The RRC connection/resume request message may include the UE ID (e.g., s-TMSI or resumption ID), etc.

Embodiment 1-5

The ambient IoT device that transmitted MSG 3 can receive MSG4 (from the reader device). At this time, MSG4 can include UE ID (or/and contention resolution MAC CE) and/or sequence information. Here, the sequence can be selected/determined according to at least one of the MSG1 sequence selection methods described above.

If MSG4 contains the UE ID (or device ID) or sequence of the ambient IoT device, the ambient IoT device may transmit MSG5 (to the reader device).

For example, MSG5 may include UE capability information. For example, the UE capability information may include capability information related to device type (e.g., device type A, B, C), other processing times, early indication (e.g., device type, other processing times), UE group/type, connection type, etc. Additionally or alternatively, MSG5 may include at least one of a UE ID, a sequence, and user data.

Embodiment 1-6

The time interval or resource time for transmission of the MSG described in at least one of Embodiments 1-1 to 1-5 may be determined/configured through the DTX cycle and offset. For example, the DTX cycle may be determined as a 1-second cycle, and transmission of MSG1, MSG3, and/or MSG5 may be determined to be possible after a specific time offset based on MSG0, MSG2, and/or MSG4 or a DL sync signal.

Here, the DTX duration and offset can be set/determined to the same or different values for different reader devices or different areas (e.g., cell/RAN area/tracking area, etc.). For example, the DTX period and offset can be exchanged between different reader devices, and thus different time/frequency resources can be allocated to different areas.

Embodiment 2

Embodiment 2 relates to a link failure determination and recovery method.

After receiving MSG0/2/4 or transmitting MSG1/3/5, the ambient IoT device may determine that a session or connection with the reader device has been established or resumed.

i) After receiving MSG0/2/4 or transmitting MSG1/3/5, ii) upon transmission/reception of a specific MSG (or upon transmission/reception of a sequence selected by the UE ID or the ambient IoT device), or iii) upon transmission/reception of a specific reference signal, the ambient IoT device may start or restart the inactivity timer.

Additionally or alternatively, the reader device may periodically or aperiodically transmit a poll or order command to the ambient IoT device. The ambient IoT device receiving the poll or order command may transmit a MSG containing the UE ID or the selected sequence to the reader device. In this case, when receiving the poll or order command or transmitting the MSG, the ambient IoT device may (re)start an inactivity timer.

Additionally or alternatively, when the inactivity timer expires, the ambient IoT device may release or suspend the session or connection. That is, when it does not transmit or receive a MSG for a certain period of time, or does not transmit or receive a UE ID or a terminal-selected sequence for a certain period of time, the ambient IoT device may declare a link failure (due to the inactivity timer expiry) and release or suspend the session/connection with the reader device.

Here, the inactivity timer value may be pre-specified and stored in the ambient IoT device, or may be transmitted to the ambient IoT device via MSG0/2/4 or system information.

A specific reference signal may be configured to be exclusive to the ambient IoT device or exclusive to the reader device. In this case, if a value associated with the specific reference signal is greater than or equal to a threshold, the ambient IoT device may (re)start an inactivity timer. As another example, if a value associated with the specific reference signal is less than or equal to a threshold, the ambient IoT device may determine that the sync is terminated (out of sync). After N consecutive sync terminations and a certain amount of time has passed, the ambient IoT device may declare a link failure and release or suspend the session or connection with the reader device.

When the inactivity timer expires and link recovery is required, the IoT device may transmit a recovery message to the reader device. At this time, the recovery message can include the UE ID, the selected sequence, and/or the failure reason. The recovery message may be transmitted using the MSG1 transmission method. Then, transmission and reception are performed in the order of MSG2/3/4/5, and link recovery and re-establishment can be performed.

## Embodiment 3

Embodiment 1 relates to a method for configuring/defining a symbol duration for ambient IoT (AmIoT) terminal/device communication.

Considering the numerology of the NR system and the target data rate of the AmIoT system, the symbol interval for AmIoT communication can be determined according to at least one of the embodiments described below.

In describing the present disclosure, the NR system can be replaced with a (5G and/or 6G) wireless communication system (or a parent system/coexisting communication system). The (CP-)OFDM symbol can be replaced with an existing transmission time unit of the (5G and/or 6G) wireless communication system (or a parent system/coexisting communication system).

### Embodiment 3-1

N CF-OFDM symbol intervals of an NR system can be defined as a symbol interval for one AmIoT communication. The corresponding N value can be predefined or set/instructed to an AmIoT device.

### Embodiment 3-2

One CP-OFDM symbol interval of the NR system can be divided into M equal parts, and one of the M equally divided CP-OFDM symbol intervals can be defined as a symbol interval for AmIoT communication. Here, the value of M can be predefined or set/indicated by the AmIoT device. At this time, one CF-OFDM symbol interval may include a CP interval, but is not limited thereto. One CF-OFDM symbol interval may include only a part of the CP interval or may not include the CP interval.

### Embodiment 3-3

One or more OFDM symbols (e.g., predefined OFDM symbol sample values (e.g., Tc or $T_S$) can be defined as a sample group, and K sample group(s) can be defined as a symbol interval for one AmIoT communication. Here, the K value and the sample group determination method can be predefined or set/instructed to the AmIoT device.

One of Embodiments 3-1, 3-2 and 3-3 may be configured/applied differently or configured/applied commonly depending on the following elements.

- Use cases for AmIoT Devices (e.g., sensors, commands, inventory, positioning, etc.)
- Device type, tag ID, and/or topology of AmIoT devices and AmIoT communication

## Embodiment 4

A method for configuring a symbol section for ambient IoT (AmIoT) device communication is disclosed.

For communication between AmIoT devices corresponding to device type A or B, both an energy transfer signal (ETS) for energy harvesting purposes and a backscattering signal (BSS) exchanged for backscattering communication after the AmIoT devices receive the ETS may be required.

In order for the BSS signal transmitted by the base station or intermediate node (or, a separate UE device) to be efficiently received as a backscattered signal by the AmIoT device, it may be advantageous for the BSS signal to be configured as CW.

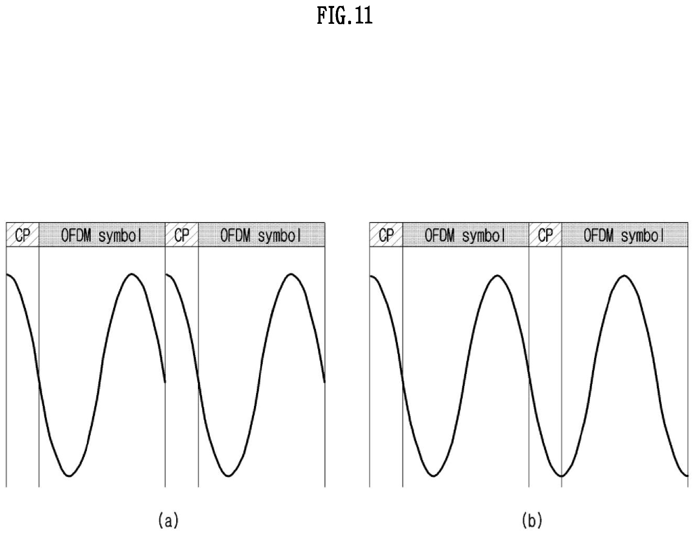

However, in order to be robust against inter-symbol interference (ISI) after generating a single OFDM symbol in the NR system, a CP may be attached to the front of the generated OFDM symbol, thereby configuring the final OFDM symbol. Due to the above-described characteristics, it may be difficult to configure a CW that maintains the same frequency component across multiple OFDM symbols, as illustrated in (a) of FIG. 11.

To overcome this, as shown in (b) of Fig. 11, by adjusting the phase for each OFDM symbol, the waveform can be configured so that the CW condition is satisfied across multiple OFDM symbols even if a CP is attached to the front of the OFDM symbol.

As described above, in order to control the phase for each CP, the pi/2-BPSK (binary phase-shift keying) modulation method can be applied. However, even when the Pi/2-BPSK modulation method is applied, a problem may arise where the phase exceeds Pi/2 or Pi/4 due to the CP inserted in the middle. Therefore, a method for controlling the phase for each CP can be applied simultaneously with the application of the Pi/2-BPSK modulation method.

Pi/2-BPSK modulation (and the phase control per CP) makes sense in situations where data is modulated and transmitted symbol by symbol, but Pi/2-BPSK modulation (and the phase control per CP) can only be applied to BSS (not ETS).

Additionally, when the above-described CW transmission method is applied, the unit and/or period in which CW is maintained can be configured/indicated by the base station to the AmIoT device. For example, as illustrated in (b) of FIG. 11, when CW is maintained for every 2 OFDM symbols, 2 OFDM symbol interval information and/or the starting point of the interval (e.g., SFN#0 or every sub-frame) can be set/defined/instructed. Here, the interval information can be configured in units of OFDM symbols (or slots, subframes, or absolute time). For example, when the interval is configured/indicated as 1 slot, the AmIoT device can assume that CW is maintained for at least a plurality of OFDM symbols within the same slot.

As another example of the present disclosure, a signal for an AmIoT device may be configured by repeating OFDM symbols without a CP (similar to the NR PRACH signal configuration). In this case, the base station may either abandon FDM with NR signals or perform FDM with existing NR signals after configuring a guard band along the frequency axis.

Since the CW properties may not be maintained due to CP insertion, the CP interval may be used for a separate purpose. For example, during the CP interval (or during the symbol interval (or part of the symbol interval) for AmIoT device communication including the CP interval), the base station may transmit a known sequence, rather than data, to the AmIoT device, which may then use the sequence for time and/or frequency axis synchronization.

As described above, the CP interval (or the symbol interval for AmIoT device communication including the CP interval (or a part of the symbol interval)) for each symbol may not be used for other purposes. Therefore, the AmIoT device can configure/receive specific time interval information. The interval information may be configured in units of OFDM symbols (or slots, sub-frames, absolute time) (e.g., X mesc, Y usec). For example, when information such as 1 slot is set, the AmIoT device can recognize that the CP interval (or the symbol interval for AmIoT device communication including the CP interval (or a part of the symbol interval)) for each slot is configured in a known sequence.

As described above, the method of maintaining CW across multiple OFDM symbols can be applied to embodiment 3-1 (i.e., an embodiment of a method of defining N CP-OFDM symbol intervals as a symbol interval for one AmIoT communication).

As described above, the CW transmission method can be applied to both ETS and BSS without distinction. As another example, since a higher PAPR can increase energy transfer efficiency, the CW transmission method can be applied only to BSS (and not to ETS).

Embodiment 5

Embodiment 5 relates to a frequency modulation method of a backscattering signal considering frequency diversity and/or (inter-cell) interference randomization.

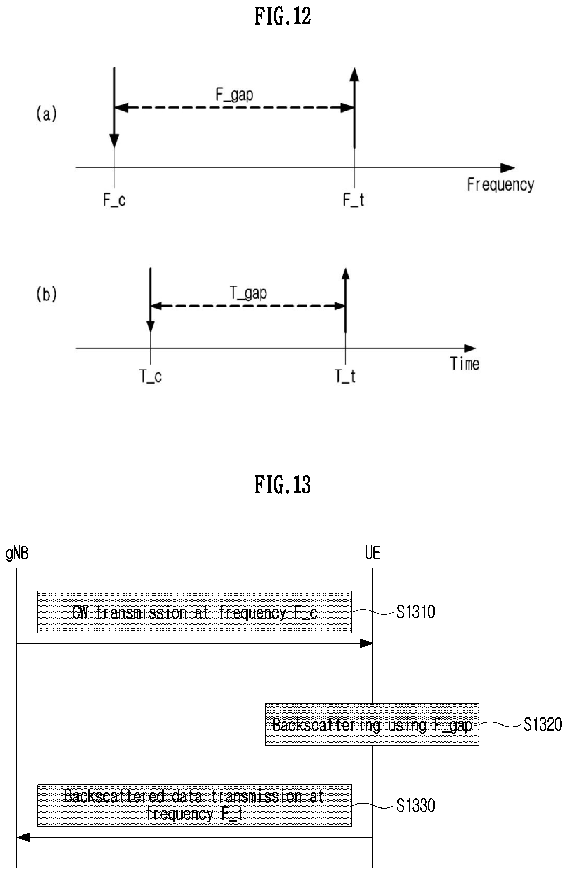

As an example of the present disclosure, as illustrated in FIG. 12 (a), an AmIoT device that receives a CW (i.e., BSS signal) of frequency $F\_c$ transmitted by a base station or intermediate node (or, separate terminal device) can modulate the frequency by applying $F\_{gap}$. Then, the AmIoT device may transmit the backscattered signal/data to the base station or intermediate node (or, separate terminal device) via the frequency $F\_t$.

It may be advantageous to increase the efficiency of IoT communications by reducing interference when signals are received from multiple base stations or intermediate nodes (or separate UE devices) that may be present in the vicinity from the receiving perspective of a single AmIoT device. Similarly, it may be advantageous to increase the efficiency of IoT communications by reducing interference when signals are received from multiple AmIoT devices from the receiving perspective of a base station or intermediate node (or separate UE device).

Additionally, in a wireless channel environment, fading can significantly deteriorate communication efficiency due to the occurrence of fading on specific frequencies (e.g., $F\_c$ or $F\_t$). Therefore, to overcome this, pursuing frequency diversification can help maximize the efficiency of IoT communication. Below, a method for determining $F\_c$ and/or $F\_t$ is described.

In consideration of the effect of reducing interference when signals are received from multiple base stations or intermediate nodes (or separate terminal devices) from the perspective of receiving a single AmIoT terminal, the position of $F\_c$ may be varied by considering all or some of a plurality of elements (e.g., (physical) cell index, sub-frame index, slot index, CP-OFDM symbol index of NR system, symbol index for AmIoT terminal communication, AmIoT device type).

Similarly, in consideration of the effect of reducing interference when signals are received from multiple AmIoT devices from a base station or intermediate node (or, separate terminal device) receiving perspective, the position of $F\_t$ (relative to $F\_c$) (or the size of $F\_{gap}$) may be varied by taking into account all or some of a plurality of factors (e.g., AmIoT device index, sub-frame index, slot index, CP-OFDM symbol index of NR system, symbol index for AmIoT terminal communication, AmIoT device type, capability for (maximum) $F\_{gap}$ size of AmIoT, etc.).

As an example of $F\_t$ size variability considering the AmIoT device type, for a terminal of device type A, an $F\_t$ (or F_gap size) value within a maximum of X may be set/indicated, but for a terminal of device type B, an F_t (or F_gap size) value within a maximum of Y (>X) (or within a maximum of Y but greater than/exceeding a minimum of X) may be configured/indicated. Here, the X and Y values may be preconfigured or defined.

Additionally or alternatively, taking into account the frequency diversification effect, CWs utilizing more than one F_c value at one time may be transmitted by the BSS (or/and ETS), even if the signal is from one base station or intermediate node (or separate terminal device).

Additionally or alternatively, a frequency hopping scheme may be applied to the position of F_c and/or the position of F_t (relative to F_c) (or the size of F_gap) by considering both the frequency diversification effect and the interference randomization effect. For example, individual hopping offsets of F_hop 1 and F_hop 2 may be applied, and the change period and the size of the approximate value between the two offsets may be set/applied differently. For example, the F_c value at the {t+1}-th time may be determined from the F_c value at the t-th time by the formula "F_c(t+1) = F_c(t) + F_hop1 + F_hop2".

Here, the time t value can be determined by a combination of a sub-frame index, a slot index, a symbol index, etc. The range of the period and the size of the changed value of F_hop 1 and F_hop 2 can be set separately. For example, the period and size of one of F_hop 1 and F_hop 2 (e.g., F_hop 2) can be set to always be greater than the other one (e.g., F_hop 1).

Also, the same hopping rules may be applied depending on whether the signal is an ETS or a BSS. Alternatively, different hopping rules may be applied (e.g., in BSS, both F_hop 1 and F_hop 2 are applied, whereas in ETS, only one of the two offsets is applied (e.g., F_hop2 is applied, but F_hop1 is not applied).

The positions/sizes of F_c, F_gap, F_t, F_hop1, and F_hop2 can be defined to have a multiple relationship with the SCS defined in the NR system by considering the numerology of NR. For example, the position of F_c can be configured by recycling NR-ARFCN. The sizes of F_gap, F_hop1, and F_hop2 can be determined as multiples of a specific SCS (e.g., a separately set SCS, an SCS set in the activated/initial/default BWP, the largest or smallest SCS among multiple SCSs set in the associated carrier, etc.), or as multiples of 1 RB (e.g., 12 sub-carriers) based on the specific SCS.

### Embodiment 6

Embodiment 6 relates to a time-domain modulation method of a backscattering signal considering frequency diversification and/or (inter-cell) interference randomization.

As an example of the present disclosure, as illustrated in (b) of FIG. 12, an AmIoT device that receives a signal (i.e., a BSS signal) from a base station or an intermediate node (or a separate terminal device) at time T_c can perform delayed transmission after time T_gap by applying T_gap. Accordingly, the AmIoT device can transmit the backscattered signal/data to the base station or an intermediate node (or a separate terminal device) at time T_t.

From the perspective of receiving a single AmIoT device, it may be advantageous to increase the efficiency of IoT communication by reducing interference when signals are received from multiple base stations or intermediate nodes (or separate terminal devices) that may be present in the vicinity.

Similarly, it may be beneficial to increase the efficiency of IoT communication by reducing interference when signals can be received from multiple AmIoT devices from the perspective of a base station or intermediate node (or separate terminal device). Furthermore, pursuing a time diversification effect similar to Embodiment 5 in a wireless channel environment may help maximize the efficiency of IoT communication.

Hereinafter, a method for determining F_c, F_t, T_c and/or T_t is described taking into account the above-described advantages.

In consideration of the effect of reducing interference when signals are received from multiple base stations or intermediate nodes (or separate terminal devices) from the perspective of receiving a single AmIoT device, the position of T_c may be varied by considering all or some of a plurality of elements (e.g., (physical) cell index, sub-frame index, slot index, CP-OFDM symbol index of NR system, symbol index for AmIoT device communication, AmIoT device type).

Similarly, considering the effect of reducing interference when signals can be received from multiple AmIoT devices from the perspective of receiving a base station or an intermediate node (or a separate terminal device), the position of T_t (relative to T_c) (or the size of T_gap) may be varied by considering all or some of a plurality of factors (e.g., AmIoT device index, sub-frame index, slot index, CP-OFDM symbol index of NR system, symbol index for AmIoT device communication, AmIoT device type, capability for (maximum) T_gap size of AmIoT, etc.).

As an example of T_t size variation considering the AmIoT device type, for a terminal of device type A, a T_t (or T_gap size) value within a maximum of X may be set/indicated. And, for a terminal of device type B, a T_t (or T_gap size) value within a maximum of Y (>X) (or within a maximum of Y and greater than/exceeding a minimum of X) can be configured/indicated. The X and Y values can be separately configured or predefined in advance.

Meanwhile, considering the time diversification effect, even if it is the same signal (or modulated data) from one base station or intermediate node (or separate terminal device), CWs utilizing multiple time points (i.e., multiple T_c values) can be transmitted as BSS (and/or ETS).

In addition, in the backscattered data transmission of the AmIoT device, the positions of one or more T_t (or the size of T_gap) corresponding to one T_c can be defined, and the AmIoT device may transmit a backscattered signal at the positions of multiple T_t for the same signal (or modulated signal).

Additionally or alternatively, time-varying values may be applied to the position of T_c and/or the position of T_t (relative to T_c) (or the size of T_gap) to account for time-varying and/or interference randomization effects.

For example, the T_gap value at the {t+1}th time can be determined from the T_gap value at the tth time by the formula "T_gap(t+1) = T_gap(t) + T_hop."

Here, the time t value can be determined by a combination of a sub-frame index, a slot index, a symbol index, etc. The period in which T_hop changes and the range of the size of the changed value can be configured separately. As another example, the period in which T_hop changes and the size of the changed value can be defined as a value that changes arbitrarily (within a specific set range).

Additionally or alternatively, the value of T_gap(t+1) at a particular time point {t+1} may be defined as a value that changes randomly (within a certain defined range) without any relation to T_gap(t) at a previous time point t.

Considering that the larger the T_gap, the greater the power consumption of the AmIoT device, it may be beneficial in terms of fairness for the T_gap value to change randomly. In addition, the same rule may be applied depending on whether the signal is ETS or BSS, but different rules (e.g., a rule in which the T_hop change period/value applied to BSS is different from the T_hop change period/value applied to ETS) may be applied.

The timing/size of the above-described T_c, T_gap, T_t, and T_hop can be defined to have a multiple relationship with one or more OFDM samples (e.g., predefined T_c or T_s) defined in the NR system, taking into account the numerology of NR.

FIG. 13 is a flowchart illustrating signaling between a terminal (e.g., UE or ambient IoT device) and a base station according to one embodiment of the present disclosure.

The base station may transmit a CW (i.e., a BSS signal) of frequency F_c to the terminal (S1310).

A terminal receiving a CW of frequency F_c can modulate (or/and backscatter) the frequency by applying F_gap determined according to various factors (e.g., UE ID, time index, device type, etc.) (S1320). Then, the terminal may transmit the backscattered data/signal to the base station through the frequency F_t (i.e., F_c + F_gap) (S1330).

As described in the above-described embodiments (e.g., embodiment 5, etc.), taking into account frequency diversification and/or interference randomization effects, the terminal may vary F_c and/or F_gap depending on the cell/UE ID, time index (e.g., subframe, slot, symbol, etc.), and device type.

By the various embodiments described above, in a situation where communication between multiple base stations and AmIot terminals is mixed, backscattering-based communication can be efficiently performed by varying the time/frequency time through cell/UE ID, time index (e.g., subframe, slot, symbol, etc.), device type, etc. Accordingly, communication efficiency can be increased due to frequency diversification and/or interference randomization effects.

General Device to which the Present Disclosure may be applied

FIG. 14 illustrates a block diagram of a wireless communication device according to an embodiment of the present disclosure.

In reference to FIG. 14, a first wireless device 100 and a second wireless device 200 may transmit and receive a wireless signal through a variety of radio access technologies (e.g., LTE, NR).

A first wireless device 100 may include one or more processors 102 and one or more memories 104 and may additionally include one or more transceivers 106 and/or one or more antennas 108. A processor 102 may control a memory 104 and/or a transceiver 106 and may be configured to implement description, functions, procedures, proposals, methods and/or operation flow charts disclosed in the present disclosure.

For example, the processor 102 may process the information in the memory 104 to generate first information/-signal and then transmit a wireless signal including the first information/signal through the transceiver 106. Additionally, the processor 102 may receive a wireless signal including the second information/signal through the transceiver 106 and then store information obtained from signal processing of the second information/signal in the memory 104.

A memory 104 may be connected to a processor 102 and may store a variety of information related to an operation of a processor 102. For example, a memory 104 may store a software code including commands for performing all or part of processes controlled by a processor 102 or for performing description, functions, procedures, proposals, methods and/or operation flow charts disclosed in the present disclosure. Here, a processor 102 and a memory 104 may be part of a communication modem/circuit/chip designed to implement a wireless communication technology (e.g., LTE, NR). A transceiver 106 may be connected to a processor 102 and may transmit and/or receive a wireless signal through one or more antennas 108. A transceiver 106 may include a transmitter and/or a receiver. A transceiver 106 may be used together with a RF (Radio Frequency) unit. In the present disclosure, a wireless device may mean a communication modem/circuit/chip.

A second wireless device 200 may include one or more processors 202 and one or more memories 204 and may additionally include one or more transceivers 206 and/or one or more antennas 208. A processor 202 may control a memory 204 and/or a transceiver 206 and may be configured to implement description, functions, procedures, proposals, methods and/or operation flows charts disclosed in the present disclosure. For example, a processor 202 may generate third information/signal by processing information in a memory 204, and then transmit a wireless signal including third information/signal through a transceiver 206. In addition, a processor 202 may receive a wireless signal including fourth information/signal through a transceiver 206, and then store information obtained by signal processing of fourth information/signal in a memory 204. A memory 204 may be connected to a processor 202 and may store a variety of information related to an operation of a processor 202. For example, a memory 204 may store a software code including commands for performing all or part of processes controlled by a processor 202 or for performing description, functions, procedures, proposals, methods and/or operation flow charts disclosed in the present disclosure. Here, a processor 202 and a memory 204 may be part of a communication modem/circuit/chip designed to implement a wireless communication technology (e.g., LTE, NR). A transceiver 206 may be connected to a processor 202 and may transmit and/or receive a wireless signal through one or more antennas 208. A transceiver 206 may include a transmitter and/or a receiver. A transceiver 206 may be used together with a RF unit. In the present disclosure, a wireless device may mean a communication modem/circuit/chip.

Hereinafter, a hardware element of a wireless device 100, 200 will be described in more detail. It is not limited thereto, but one or more protocol layers may be implemented by one or more processors 102, 202. For example, one or more processors 102, 202 may implement one or more layers (e.g., a functional layer such as PHY, MAC, RLC, PDCP, RRC, SDAP). One or more processors 102, 202 may generate one or more PDUs (Protocol Data Unit) and/or one or more SDUs (Service Data Unit) according to description, functions, procedures, proposals, methods and/or operation flow charts included in the present disclosure. One or more processors 102, 202 may generate a message, control information, data or information according to description, functions, procedures, proposals, methods and/or operation flow charts disclosed in the present disclosure. One or more processors 102, 202 may generate a signal (e.g., a baseband signal) including a PDU, a SDU, a message, control information, data or information according to functions, procedures, proposals and/or methods disclosed in the present disclosure to provide it to one or more transceivers 106, 206. One or more processors 102, 202 may receive a signal (e.g., a baseband signal) from one or more transceivers 106, 206 and obtain a PDU, a SDU, a message, control information, data or information according to description, functions, procedures, proposals, methods and/or operation flow charts disclosed in the present disclosure.

One or more processors 102, 202 may be referred to as a controller, a micro controller, a micro processor or a micro computer. One or more processors 102, 202 may be implemented by a hardware, a firmware, a software, or their combination. In an example, one or more ASICs(Application Specific Integrated Circuit), one or more DSPs(Digital Signal Processor), one or more DSPDs(Digital Signal Processing Device), one or more PLDs(Programmable Logic Device) or one or more FPGAs(Field Programmable Gate Arrays) may be included in one or more processors 102, 202. Description, functions, procedures, proposals, methods and/or operation flow charts disclosed in the present disclosure may be implemented by using a firmware or a software and a firmware or a software may be implemented to include a module, a procedure, a function, etc. A firmware or a software configured to perform description, functions, procedures, proposals, methods and/or operation flow charts disclosed in the present disclosure may be included in one or more processors 102, 202 or may be stored in one or more memories 104, 204 and driven by one or more processors 102, 202. Description, functions, procedures, proposals, methods and/or operation flow charts disclosed in the present disclosure may be implemented by using a firmware or a software in a form of a code, a command and/or a set of commands.

One or more memories 104, 204 may be connected to one or more processors 102, 202 and may store data, a signal, a message, information, a program, a code, an instruction and/or a command in various forms. One or more memories 104, 204 may be configured with ROM, RAM, EPROM, a flash memory, a hard drive, a register, a cash memory, a computer readable storage medium and/or their combination. One or more memories 104, 204 may be positioned inside and/or outside one or more processors 102, 202. In addition, one or more memories 104, 204 may be connected to one or more processors 102, 202 through a variety of technologies such as a wire or wireless connection.

One or more transceivers 106, 206 may transmit user data, control information, a wireless signal/channel, etc. mentioned in methods and/or operation flow charts, etc. of the present disclosure to one or more other devices. One or more transceivers 106, 206 may receiver user data, control information, a wireless signal/channel, etc. mentioned in description, functions, procedures, proposals, methods and/or operation flow charts, etc. disclosed in the present disclosure from one or more other devices. For example, one or more transceivers 106, 206 may be connected to one or more processors 102, 202 and may transmit and receive a wireless signal. For example, one or more processors 102, 202 may control one or more transceivers 106, 206 to transmit user data, control information or a wireless signal to one or more other devices. In addition, one or more processors 102, 202 may control one or more transceivers 106, 206 to receive user data, control information or a wireless signal from one or more other devices. In addition, one or more transceivers 106, 206 may be connected to one or more antennas 108, 208 and one or more transceivers 106, 206 may be configured to transmit and receive user data, control information, a wireless signal/channel, etc. mentioned in description, functions, procedures, proposals, methods and/or operation flow charts, etc. disclosed in the present disclosure through one or more antennas 108, 208. In the present disclosure, one or more antennas may be a plurality of physical antennas or a plurality of logical antennas (e.g., an antenna port). One or more transceivers 106, 206 may convert a received wireless signal/channel, etc. into a baseband signal from a RF band signal to process received user data, control information, wireless signal/channel, etc. by using one or more processors 102, 202. One or more transceivers 106, 206 may convert user data, control information, a wireless signal/channel, etc. which are processed by using one or more processors 102, 202 from a baseband signal to a RF band signal. Therefore, one or more transceivers 106, 206 may include an (analogue) oscillator and/or a filter.

Embodiments described above are that elements and features of the present disclosure are combined in a predetermined form. Each element or feature should be considered to be optional unless otherwise explicitly mentioned. Each element or feature may be implemented in a form that it is not combined with other element or feature. In addition, an embodiment of the present disclosure may include combining a part of elements and/or features. An order of operations described in embodiments of the present disclosure may be changed. Some elements or features of one embodiment may be included in other embodiment or may be substituted with a corresponding element or a feature of other embodiment. It is clear that an embodiment may include combining claims without an explicit dependency relationship in claims or may be included as a new claim by amendment after application.

It is clear to a person skilled in the pertinent art that the present disclosure may be implemented in other specific form in a scope not going beyond an essential feature of the present disclosure. Accordingly, the above-described detailed description should not be restrictively construed in every aspect and should be considered to be illustrative. A scope of the present disclosure should be determined by reasonable construction of an attached claim and all changes within an equivalent scope of the present disclosure are included in a scope of the present disclosure.

A scope of the present disclosure includes software or machine-executable commands (e.g., an operating system, an application, a firmware, a program, etc.) which execute an operation according to a method of various embodiments in a device or a computer and a non-transitory computer-readable medium that such a software or a command, etc. are stored and are executable in a device or a computer. A command which may be used to program a processing system performing a feature described in the present disclosure may be stored in a storage medium or a computer-readable storage medium and a feature described in the present disclosure may be implemented by using a computer program product including such a storage medium. A storage medium may include a high-speed random-access memory such as DRAM, SRAM, DDR RAM or other random-access solid state memory device, but it is not limited thereto, and it may include a nonvolatile memory such as one or more magnetic disk storage devices, optical disk storage devices, flash memory devices or other nonvolatile solid state storage devices. A memory optionally includes one or more storage devices positioned remotely from processor(s). A memory or alternatively, nonvolatile memory device(s) in a memory include a non-transitory computer-readable storage medium. A feature described in the present disclosure may be stored in any one of machine-readable mediums to control a hardware of a processing system and may be integrated into a software and/or a firmware which allows a processing system to interact with other mechanism utilizing a result from an embodiment of the present disclosure. Such a software or a firmware may include an application code, a device driver, an operating system and an execution environment/container, but it is not limited thereto.

Here, a wireless communication technology implemented in a wireless device 100, 200 of the present disclosure may include Narrowband Internet of Things for a low-power communication as well as LTE, NR and 6G. Here, for example, an NB-IoT technology may be an example of a LPWAN(Low Power Wide Area Network) technology, may be implemented in a standard of LTE Cat NB1 and/or LTE Cat NB2, etc. and is not limited to the above-described name. Additionally or alternatively, a wireless communication technology implemented in a wireless device 100, 200 of the present disclosure may perform a communication based on a LTE-M technology. Here, in an example, a LTE-M technology may be an example of a LPWAN technology and may be referred to a variety of names such as an eMTC (enhanced Machine Type Communication), etc. For example, an LTE-M technology may be implemented in at least any one of various standards including 1) LTE CAT 0, 2) LTE Cat M1, 3) LTE Cat M2, 4) LTE non-BL(non-Bandwidth Limited), 5) LTE-MTC, 6) LTE Machine Type Communication, and/or 7) LTE M and so on and it is not limited to the above-described name. Additionally or alternatively, a wireless communication technology implemented in a wireless device 100, 200 of the present disclosure may include at least any one of a ZigBee, a Bluetooth and a low power wide area network (LPWAN) considering a low-power communication and it is not limited to the above-described name. In an example, a ZigBee technology may generate PAN(personal area networks) related to a small/low-power digital communication based on a variety of standards such as IEEE 802.15.4, etc. and may be referred to as a variety of names.

[Industrial Applicability]

A method proposed by the present disclosure is mainly described based on an example applied to 3GPP LTE/LTE-A, 5G system, but may be applied to various wireless communication systems other than the 3GPP LTE/LTE-A, 5G system.

**Claims**

1. A method comprising:

   receiving, by a first device from a network node, a first message including first information related to a entire time period for transmitting a second message; and
   transmitting, by the first device to the network node, the second message within a first time interval or a second time interval among the entire time period based on an energy storage level of the first device,
   wherein a starting point of the entire time period is determined based on the second information related to the first message.

2. The method of claim 1, wherein:
   the second information includes at least one of: i) a time point of transmission or reception of the first message, ii) a time offset based on the time point of transmission or reception of the first message, or iii) a length or pattern of the entire time period.

3. The method of claim 2, wherein:
   the starting point of the entire time period is a point in time after the time offset based on the time of transmission or reception of the first message.

4. The method of claim 1, wherein:

   based on the energy storage level of the first device being less than or equal to a first threshold, the second message is transmitted from the first device to the network node within the first time interval, and
   based on the energy storage level of the first device being less than or equal to a second threshold but greater than or equal to the first threshold, the second message is transmitted from the first device to the network node within the second time interval.

5. The method of claim 4, wherein:
   at least one of the first threshold or the second threshold is predefined or configured by the network node.

6. The method of claim 1, wherein:

   the first message includes at least one of access-related system information or information for resolving a collision, and
   the access-related system information includes at least one of information indicating whether an access is possible, the second information, or a timer value for an access.

7. The method of claim 6, wherein:
   whether to transmit the second message of the first device is determined based on information indicating whether the access is possible.

8. The method of claim 1, wherein:
   the reception of the first message from the network node is monitored by the first device through a carrier sensing procedure.

9. The method of claim 4, wherein:

   based on the energy storage level of the first device being less than or equal to the first threshold, the second message is transmitted from the first device to the network node using a first transmission resource among a plurality of transmission resources, and
   based on the energy storage level of the first device being greater than or equal to the first threshold and less than or equal to the second threshold, the second message is transmitted from the first device to the network node using a second transmission resource among the plurality of transmission resources.

10. The method of claim 1, wherein:

    a third message corresponding to the second message is transmitted from the network node to the first device, and

the third message includes an ACK (acknowledgement) or NACK (negative acknowledgment) for the second message.

11. The method of claim 1, wherein:
the network node includes at least one of a base station or an intermediate node.

12. A first device comprising:

at least one transceiver; and
at least one processor connected to the at least one transceiver,
wherein the at least one processor is configured to:

receive, from a network node through the at least one transceiver, a first message including first information related to a entire time period for transmitting a second message; and
transmit, to the network node through the at least one transceiver, the second message within a first time interval or a second time interval among the entire time period based on an energy storage level of the first device,
wherein a starting point of the entire time period is determined based on the second information related to the first message.

13. A method comprising:

transmitting, by a network node to at least one device including a first device, a first message including first information related to an entire time period for transmitting a second message; and
receiving, by the network node from the first device, the second message within a first time interval or a second time interval of the entire time period based on an energy storage level of the first device,
wherein a starting point of the entire time period is determined based on the second information related to the first message.

14. A network node comprising:

at least one transceiver; and
at least one processor connected to the at least one transceiver,
wherein the at least one processor is configured to:

transmit, to at least one device including a first device, a first message including first information related to an entire time period for transmitting a second message; and
receive, from the first device, the second message within a first time interval or a second time interval of the entire time period based on an energy storage level of the first device,
wherein a starting point of the entire time period is determined based on the second information related to the first message.

15. A processing device configured to control a first device in a wireless communication system, the processing device comprising:

at least one processor; and
at least one computer memory operatively coupled to the at least one processor and storing instructions for performing operations upon being executed by the at least one processor,
wherein the operations comprise:

receiving, by a first device from a network node, a first message including first information related to a entire time period for transmitting a second message; and
transmitting, by the first device to the network node, the second message within a first time interval or a second time interval among the entire time period based on an energy storage level of the first device,
wherein a starting point of the entire time period is determined based on the second information related to the first message.

16. At least one non-transitory computer readable medium storing at least one instruction, wherein:
the at least one instruction executed by at least one processor controls a device in a wireless communication system to perform:

receive, by a first device from a network node, a first message including first information related to a entire time period for transmitting a second message; and
transmit, by the first device to the network node, the second message within a first time interval or a second time interval among the entire time period based on an energy storage level of the first device,
wherein a starting point of the entire time period is determined based on the second information related to the first message.

# FIG.1

## FIG.2

Radio Frame 10ms

Subframe 1ms

| 0 | 1 | 2 | 3 | 4 | 5 | 6 | 7 | 8 | 9 |

Fixed Size

Subframe ={1,2,4} Slots

Slot

| 0 | 1 | 2 | 3 |

Slot={7,14} Symbols

Symbol

| 0 | 1 | 2 | 3 | 4 | 5 | 6 | 7 | 8 | 9 | 10 | 11 | 12 | 13 |

Size depends on subcarrier spacing

Mini-Slot (URLLC)

Mini-Slot={2,4,7} Symbols

## FIG.3

One Subframe

$14 \cdot 2^{\mu}$ OFDM Symbol

$k = N_{RB}^{\mu} N_{SC}^{RB} - 1$

$N_{RB}^{\mu} N_{SC}^{RB} - 1$ Subcarrier

$N_{SC}^{RB}$ Subcarrier

Resource Block

Resource Element
- In a resource grid, $(k, \bar{l})$
- In a resource block, $(k, l)$

$k = 0$

$l = 0$

$l = 14 \cdot 2^{\mu} - 1$

# FIG.4

# FIG.5

# FIG.6

| INITIAL CELL SEARCH | SYSTEM INFORMATION RECEPTION | RANDOM ACCESS PROCEDURE | | | | GENERAL DL/UL Tx/Rx | |
|---|---|---|---|---|---|---|---|
| PSS/SSS& [DLRS]& PBCH | PDCCH/ PDSCH (BCCH) | PRACH | PDCCH/ PDSCH | PUSCH | PDCCH/ PDSCH | PDCCH/ PDSCH | PUSCH/ PUCCH |
| S601 | S602 | S603 | S604 | S605 | S606 | S607 | S608 |

· DL/UL ACK/NACK
· UE CQI/PMI RI REPORT
  USING PUSCH AND PUCCH

# FIG.7

| Topology 1:<br>BS↔Ambient IoT device | Topology 2:<br>BS↔intermediate node↔Ambient IoT device | Topology 3:<br>BS↔assisting node↔Ambient IoT device↔BS | Topology 4:<br>UE↔Ambient IoT device |

→ Ambient IoT data/signaling

(a)    (b)    (c)    (d)

EP 4 776 739 A1

## FIG.8

RECEIVING, FROM A NETWORK NODE, A FIRST MESSAGE INCLUDING FIRST INFORMATION RELATED TO THE ENTIRE TIME PERIOD FOR TRANSMITTING THE SECOND MESSAGE    ～ S810

TRANSMITTING A SECOND MESSAGE TO THE NETWORK NODE WITHIN A FIRST TIME INTERVAL OR A SECOND TIME INTERVAL AMONG THE ENTIRE TIME PERIOD BASED ON THE ENERGY STORAGE LEVEL OF THE FIRST DEVICE    ～ S820

## FIG.9

TRANSMITTING, TO AT LEAST ONE DEVICE, A FIRST MESSAGE INCLUDING FIRST INFORMATION RELATED TO THE ENTIRE TIME PERIOD FOR TRANSMITTING THE SECOND MESSAGE    ～ S910

RECEIVING A SECOND MESSAGE FROM THE FIRST DEVICE WITHIN THE FIRST TIME INTERVAL OR THE SECOND TIME INTERVAL AMONG THE ENTIRE TIME PERIOD BASED ON THE ENERGY STORAGE LEVEL OF THE FIRST DEVICE    ～ S920

FIG.10

FIG.11

(a)

(b)

EP 4 776 739 A1

# FIG.12

(a)

F_gap

F_c          F_t          Frequency

(b)

T_gap

T_c          T_t          Time

# FIG.13

gNB                                        UE

| CW transmission at frequency F_c | S1310 |

| Backscattering using F_gap | S1320 |

| Backscattered data transmission at frequency F_t | S1330 |

EP 4 776 739 A1

# FIG.14

# EP 4 776 739 A1

## INTERNATIONAL SEARCH REPORT

International application No.

**PCT/KR2024/013670**

### A. CLASSIFICATION OF SUBJECT MATTER

**H04W 74/0816**(2024.01)i; **H04W 74/00**(2009.01)i; **H04W 48/08**(2009.01)i; **H04W 4/70**(2018.01)i

According to International Patent Classification (IPC) or to both national classification and IPC

### B. FIELDS SEARCHED

Minimum documentation searched (classification system followed by classification symbols)

H04W 74/0816(2024.01); G01S 17/931(2020.01); H04W 52/02(2009.01); H04W 74/08(2009.01); H04W 76/10(2018.01); H04W 76/27(2018.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 앰비언트(ambient), 사물 인터넷(Internet of things, IoT), 랜덤 액세스(random access), 에너지 저장 레벨(energy storage level)

### C. DOCUMENTS CONSIDERED TO BE RELEVANT

| Category* | Citation of document, with indication, where appropriate, of the relevant passages | Relevant to claim No. |
|---|---|---|
| X | KR 10-2023-0009517 A (INTEL CORPORATION) 17 January 2023 (2023-01-17)<br>See paragraphs [0015], [0158], [0311], [0399]-[0400] and [0408]. | 1-16 |
| A | KR 10-2011-0083535 A (LG ELECTRONICS INC.) 20 July 2011 (2011-07-20)<br>See paragraphs [0088]-[0091]; and figure 10. | 1-16 |
| A | KR 10-2023-0037416 A (SAMSUNG ELECTRONICS CO., LTD.) 16 March 2023 (2023-03-16)<br>See paragraphs [0124]-[0260]; and figures 9-16. | 1-16 |
| A | KR 10-2155693 B1 (RESEARCH & BUSINESS FOUNDATION SUNGKYUNKWAN UNIVERSITY) 14 September 2020 (2020-09-14)<br>See paragraphs [0050]-[0105]; and figures 1-6. | 1-16 |
| A | WO 2023-117885 A1 (FRAUNHOFER-GESELLSCHAFT ZUR FORDERUNG DER ANGEWANDTEN FORSCHUNG E.V.) 29 June 2023 (2023-06-29)<br>See claims 1-52. | 1-16 |

☐ Further documents are listed in the continuation of Box C.　　☑ See patent family annex.

| | | |
|---|---|---|
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "D" | document cited by the applicant in the international application | "X" document of particular relevance; the claimed invention cannot be considered novel or cannot be considered to involve an inventive step when the document is taken alone |
| "E" | earlier application or patent but published on or after the international filing date | |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
|---|---|
| **13 December 2024** | **16 December 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

International application No.

**PCT/KR2024/013670**

| Patent document cited in search report | | | Publication date (day/month/year) | Patent family member(s) | | | Publication date (day/month/year) |
|---|---|---|---|---|---|---|---|
| KR | 10-2023-0009517 | A | 17 January 2023 | CN | 110301143 | A | 01 October 2019 |
| | | | | CN | 114679762 | A | 28 June 2022 |
| | | | | CN | 114900797 | A | 12 August 2022 |
| | | | | CN | 114900858 | A | 12 August 2022 |
| | | | | CN | 114938533 | A | 23 August 2022 |
| | | | | CN | 114979973 | A | 30 August 2022 |
| | | | | CN | 114980221 | A | 30 August 2022 |
| | | | | CN | 115103330 | A | 23 September 2022 |
| | | | | EP | 3563595 | A2 | 06 November 2019 |
| | | | | JP | 2020-507233 | A | 05 March 2020 |
| | | | | JP | 2022-071204 | A | 13 May 2022 |
| | | | | JP | 2023-106527 | A | 01 August 2023 |
| | | | | KR | 10-2019-0093204 | A | 08 August 2019 |
| | | | | KR | 10-2024-0148966 | A | 11 October 2024 |
| | | | | US | 2019-0364492 | A1 | 28 November 2019 |
| | | | | US | 2020-0205062 | A1 | 25 June 2020 |
| | | | | US | 2023-0138578 | A1 | 04 May 2023 |
| | | | | US | 2024-0073796 | A1 | 29 February 2024 |
| | | | | WO | 2018-125686 | A2 | 05 July 2018 |
| KR | 10-2011-0083535 | A | 20 July 2011 | CN | 102714537 | A | 03 October 2012 |
| | | | | CN | 102714856 | A | 03 October 2012 |
| | | | | KR | 10-2011-0083538 | A | 20 July 2011 |
| | | | | US | 2012-0281580 | A1 | 08 November 2012 |
| | | | | US | 2012-0309419 | A1 | 06 December 2012 |
| | | | | US | 2013-0010768 | A1 | 10 January 2013 |
| | | | | WO | 2011-087288 | A2 | 21 July 2011 |
| | | | | WO | 2011-087290 | A2 | 21 July 2011 |
| | | | | WO | 2011-087291 | A2 | 21 July 2011 |
| KR | 10-2023-0037416 | A | 16 March 2023 | EP | 4376544 | A1 | 29 May 2024 |
| | | | | US | 2024-0163958 | A1 | 16 May 2024 |
| | | | | WO | 2023-038253 | A1 | 16 March 2023 |
| KR | 10-2155693 | B1 | 14 September 2020 | None | | | |
| WO | 2023-117885 | A1 | 29 June 2023 | CN | 118765525 | A | 11 October 2024 |
| | | | | EP | 4454353 | A1 | 30 October 2024 |
| | | | | KR | 10-2024-0128925 | A | 27 August 2024 |
| | | | | US | 2024-0340802 | A1 | 10 October 2024 |

Form PCT/ISA/210 (patent family annex) (July 2022)